# EUROPÄISCHE PATENTSCHRIFT

(11) **EP 1 088 387 B1**
(45) Veröffentlichungstag und Bekanntmachung des Hinweises auf die Patenterteilung: **15.09.2004**
(21) Anmeldenummer: 99927940.9
(22) Anmeldetag: 10.06.1999
(51) Int. Cl.: H02P 1/16

(54) **ANORDNUNG MIT EINEM ELEKTROMOTOR**
DEVICE WITH AN ELECTROMOTOR
DISPOSITIF COMPORTANT UN MOTEUR ELECTRIQUE

(30) Priorität: 13.06.1998 DE 19826458
(43) Veröffentlichungstag der Anmeldung: 04.04.2001
(60) Teilanmeldung: 04013842.2
(73) Patentinhaber: ebm-papst St. Georgen GmbH & Co. KG, 78112 St. Georgen (DE)
(72) Erfinder: KARWATH, Arno, D-78626 Rottweil (DE); HORNBERGER, Jörg, D-72280 Dornstetten (DE); JESKE, Frank, D-78112 St. Georgen (DE); RAPPENECKER, Hermann, D-78147 Vöhrenbach (DE); KALTENBRUNNER, Hansjörg, 78052 VS Pfaffenweiler (DE)
(74) Vertreter: Raible, Hans, Dipl.-Ing.
(86) Internationale Anmeldenummer: PCT/EP1999/003992
(87) Internationale Veröffentlichungsnummer: WO 1999/066633

(56) Entgegenhaltungen:
- EP-A- 0 347 702
- DE-A- 2 417 659
- DE-A- 3 607 014
- DE-A- 3 834 259
- DE-A- 4 130 040
- DE-A- 19 744 729
- US-A- 4 833 628
- US-A- 5 455 934
- US-A- 5 557 182

## Beschreibung

Die Erfindung betrifft eine Anordnung mit einem Elektromotor und insbesondere mit einem elektronisch kommutierten Motor (ECM). Sie betrifft ferner eine Verwendung einer solchen Anordnung.

Beispiele für elektronisch kommutierte Motoren zeigen beispielsweise folpende Schriften:
DE 44 41 372 A1
EP 0 658 973 B1
DE-U 296 06 939.6
DE 195 15 944 A1
EP 0 741 449 A1
EP 0 744 807 B1
DE 195 18 991 A1
DE 196 47 983 A1
EP 0 780 962 A2

Die EP 0 347 702 A1 betrifft eine Steuerung für einen Elektromotor mit den Merkmalen des Oberbegriffs des Anspruchs 1. Sie verwendet einen Mikrocontroller mit einem EEPROM mit 512 Byte und einem D/A-Wandler für den Motorstrom.

Der Speicher des Mikrocontrollers enthält fest programmiert bestimmte Routinen, und er enthält im EEPROM variable Routinen, die je nach Motortyp geändert werden, um das Gerät an den Motor anzupassen. Die Änderung erfolgt entweder über ein Eingabegerät, das mit Drucktastern gesteuert wird und eine vierstellige Anzeige hat, oder von außen über einen seriellen Bus von einem externen Gerät. Der Strom in den Strängen wird gemessen, und wenn er zu hoch ist, wird gemäß gespeicherten Gleichungen der Motor abgeschaltet. Auch wird der Motor im Rechner thermisch nachgebildet.

Die Betriebsstunden werden im EEPROM gespeichert, ebenso die Zahl der Anläufe, die Zahl der Sicherungs-Auslösungen, sowie bestimmte Motortemperaturen. Die Abspeicherung erfolgt jeweils bei einem Netzausfall.

Es ist eine Aufgabe der Erfindung, eine neue Anordnung mit einem Elektromotor und eine neue Verwendung einer solchen Anordnung bereit zu stellen.

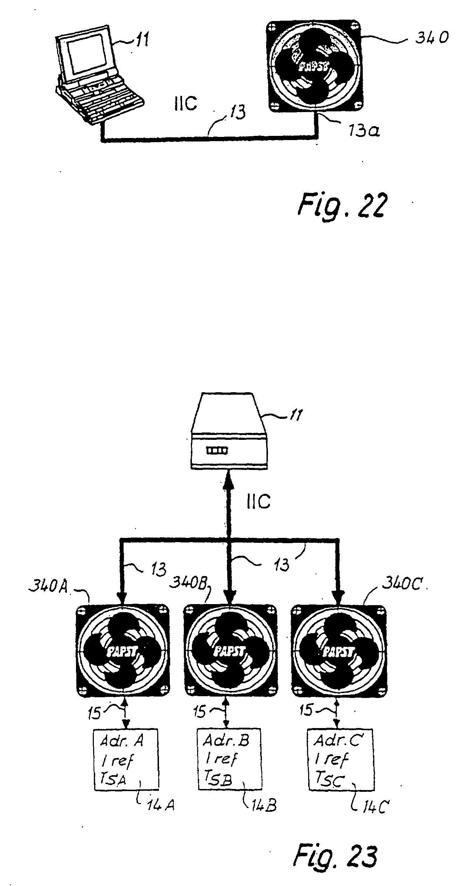

Eine Lösung der gestellten Aufgabe ist Gegenstand des Patentanspruchs 1. Hierbei ist dem Mikroprozessor ein gespeichertes Verzeichnis zugeordnet, welches zu Objekten, die über die Datenleitung übertragbar sind, vorgegebene Parameter für die Übertragung dieser Objekte enthält. Dies beschleunigt die Übertragung dieser Objekte. So ist es in einfacher Weise möglich, eine solche Anordnung mit einem Elektromotor an die Bedürfnisse ihres Benutzers anzupassen, indem man die gewünschten Werte über das Interface in das nichtflüchtige Speicherglied der Anordnung einspeichert (oder aus diesem Speicherglied ausliest). Dies gilt prinzipiell für alle Motorwerte, z.B. Drehzahl, Strom-Grenzwerte, Temperatur, Hochlaufzeit, Drehmoment im Stillstand, Betriebsstundenzahl und andere. Der Speichervorgang kann in der Fabrik erfolgen, oder zu einem späteren Zeitpunkt, um den Motor an die Bedürfnisse eines Kunden optimal anzupassen. Besonders vorteilhaft ist dies bei Motoren, welche einen Lüfter antreiben, da bei solchen Lüftern die Bedürfnisse der Anwender sehr verschieden sein können und eine solche Lüfteranordnung sehr einfach für die Bedürfnisse eines Anmelders optimiert werden kann, vgl. z.B. Fig. 22.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den Unteransprüchen. Es zeigt:
- Fig. 1: ein Prinzipschaltbild einer erfindungsgemäßen Anordnung,
- Fig. 2 bis 4: Schaltbilder zur Erläuterung von Fig. 1,
- Fig. 5: ein Flussdiagramm zum Erläutern der Arbeitsweise der Anordnung gemäß den Figuren 1 bis 4,
- Fig. 6: eine beispielhafte Darstellung einer Motoranordnung, wie sie bei der Anordnung gemäß Fig. 1 verwendet werden kann,
- Fig. 7: eine Darstellung zur Erläuterung von Fig. 5,
- Fig. 8: eine weitere Darstellung zur Erläuterung der Erfindung,
- Fig. 9: eine beispielhafte Darstellung der Erfindung in Verbindung mit einem elektronisch kommutierten Motor 10',
- Fig. 10: die Anschiußbezeichnungen des Mikrocontrollers COP 842 CJ,
- Fig. 11: ein Flußdiagramm zur Erläuterung von Fig. 9,
- Fig. 12: eine bevorzugte Variante zu den Fig. 1 bis 4 mit einem elektronisch kommutierten Motor,
- Fig. 13: ein Schaltbild analog Fig. 9, welches den elektrischen Anschluß eines nichtflüchtigen Speichers und einen seriellen Datenbus zeigt, welcher zur Übertragung von elektrischen Daten in diesen Speicher oder aus diesem Speicher dient,
- Fig. 14: ein Diagramm zur Erläuterung einer Startbedingung S und einer Stoppbedingung P bei Übertragungen über den seriellen Bus,
- Fig. 15: die Darstellung eines typischen Datenstroms über den seriellen Bus,
- Fig. 16: die Darstellung der Busausgänge von Sender (Fig. 16a), Empfänger (Fig. 16b), und des vom Master abgegebenen Taktsignals (Fig. 16c),
- Fig. 17: ein Befehls- und Datenwort, wie es zum Schreiben eines Objekts über den seriellen Bus verwendet wird,
- Fig. 18: ein Befehls- und Datenwort, wie es zum Lesen eines Objekts über den seriellen Bus verwendet wird,
- Fig. 19: ein Beispiel für eine im Gerät permanent gespeicherte Objekttabelle,
- Fig. 20: eine schematische Darstellung einer erfindungsgemäßen Anordnung, ihrer verschiedenen Speicher, und eine beispielhafte Darstellung für Daten, welche in diesen Speichern gespeichert sind,
- Fig. 21: ein Flußdiagramm für die Abfrage eines Bussystems, welches ein untergeordnetes Gerät (Slave) mit einem Hauptgerät (Master) verbindet.
- Fig. 22: ein Übersichtsbild, das zeigt, wie ein Lüfter 340 über einen Bus 13 an einen Laptop 11 angeschlossen wird, um den Lüfter 340 nach den Bedürfnissen eines Anwendungsfalls zu programmieren,
- Fig. 23: die Darstellung einer Lüfterbatterie mit drei Lüftern und deren Steuerung durch eine gemeinsame Zentraleinheit 11 über einen seriellen Bus 13, und
- Fig. 24: eine Darstellung analog Fig. 23, welche zeigt, wie die Zentraleinheit 11 über einen leistungsfähigeren Bus 346 mit einem Server 344 verbunden werden kann, um ein umfangreicheres Bussystem aufzubauen.

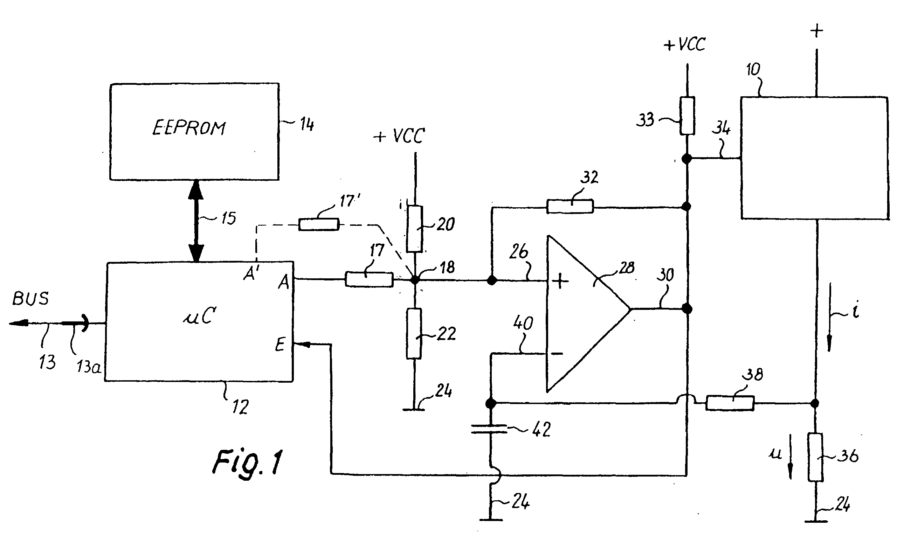

**Fig. 1** zeigt eine erste Ausführungsform einer erfindungsgemäßen Anordnung, mit der programmgesteuert bei einem Elektromotor 10 eine Strombegrenzung mit variablen Strom-Grenzwerten I_{ref} möglich ist.

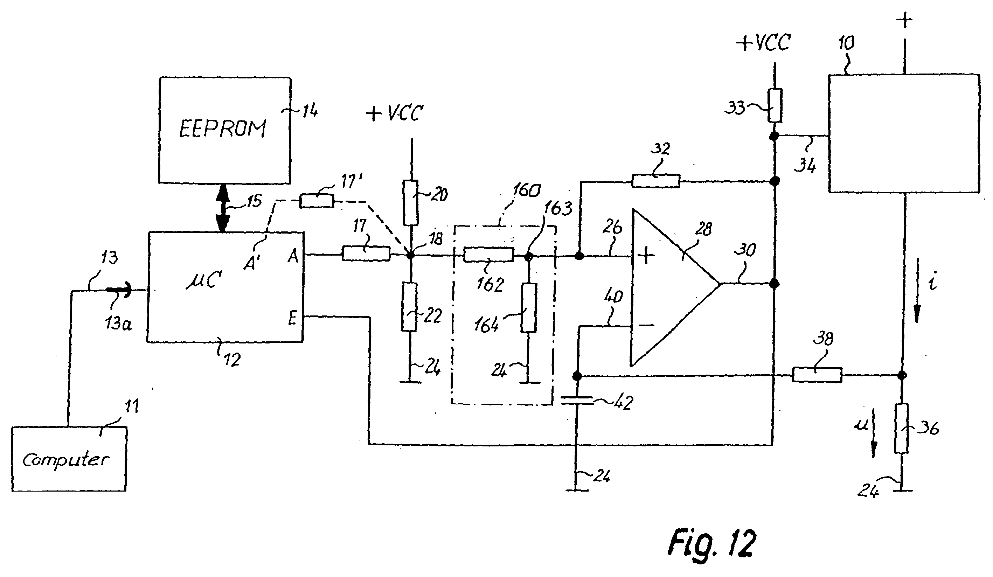

Die Anordnung weist einen Mikrocontroller 12 auf, der ggf. über ein Bus-Interface 13a und einen daran anschließbaren externen bidirektionalen Bus 13 mit einem Rechner 11 (Fig. 12) oder einem anderen Motor kommuniziert. Hier kann z.B. ein (serieller) I²C-Bus verwendet werden, oder jede andere bekannte Art von seriellem oder parallelem Bus. Zum I²C-Bus vergleiche z.B. Philips, IIC Peripherals, IC12. Firmenschrift der Firma Philips Semiconductors, 1995.

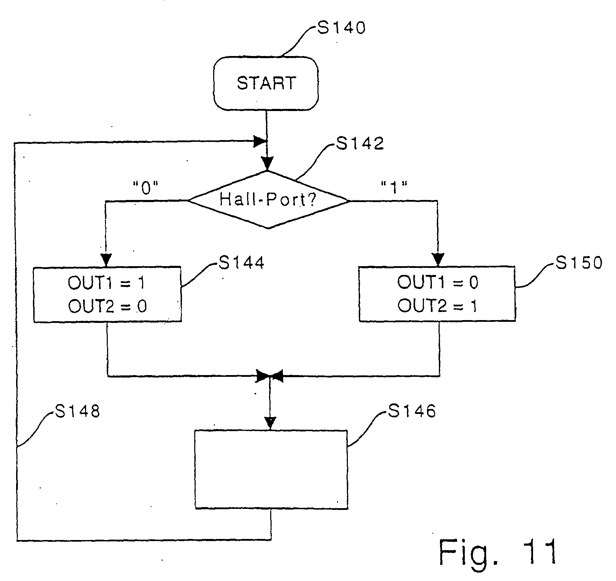

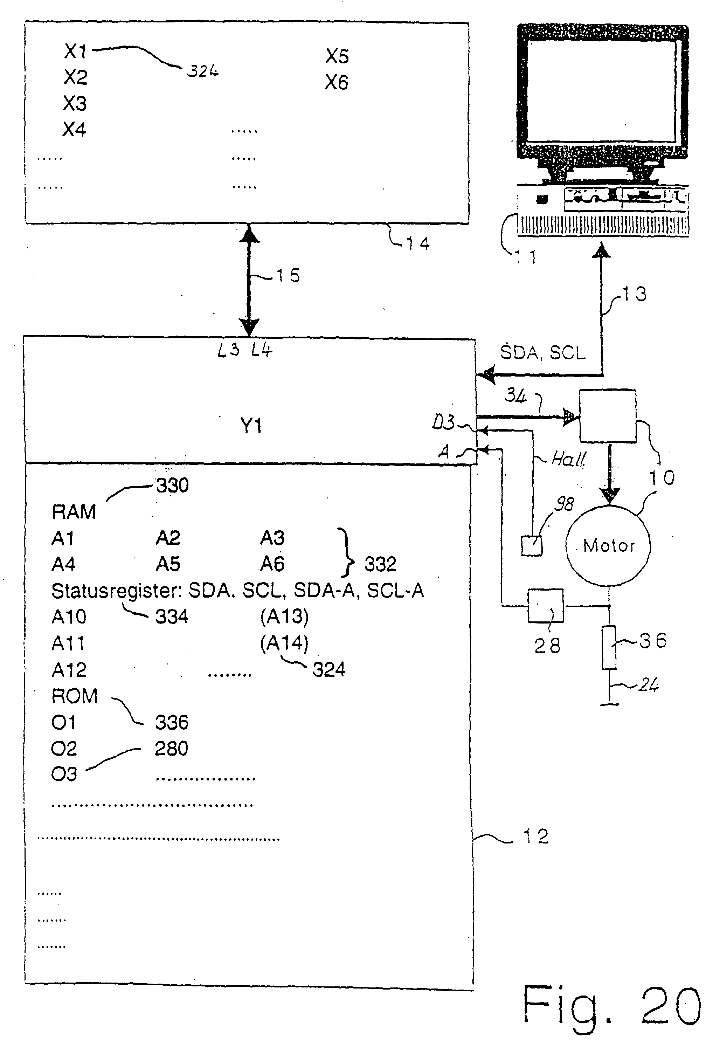

Mit dem Mikrocontroller 12 ist, ebenfalls über einen (internen) I²C-Bus 15, ein serielles EEPROM 14 verbunden, also ein nichtflüchtiger Speicher, in dem Daten für den Betrieb des Motors 10 gespeichert sind, die über den Bus 13 von außen verändert werden können, wobei der Datenverkehr zum und vom EEPROM 14 durch den Mikrocontroller 12 gesteuert wird, der außerdem Funktionen des Motors 10 steuert, z.B. dessen Kommutierung, wie nachfolgend anhand von Fig. 11 beschrieben. Der Mikrocontroller 12 hat also in Relation zum internen Bus 15 die Funktion eines Master, d.h. er steuert dort die Übertragung, während er in Relation zum externen Bus 13 die Funktion eines Slave hat, d.h. die Datenübertragung auf dem externen Bus 13 wird von einem externen Gerät 11 gesteuert, z.B. von einem üblichen Desktop-Computer, einem Laptop, oder einem speziellen Gerät, vgl. Fig. 12 oder 20.

Alternativ kann auch ein Mikrocontroller oder Mikroprozessor mit integriertem EEPROM verwendet werden, was die Programmierung vereinfacht. Solche Mikrocontroller sind auf dem Markt erhältlich.

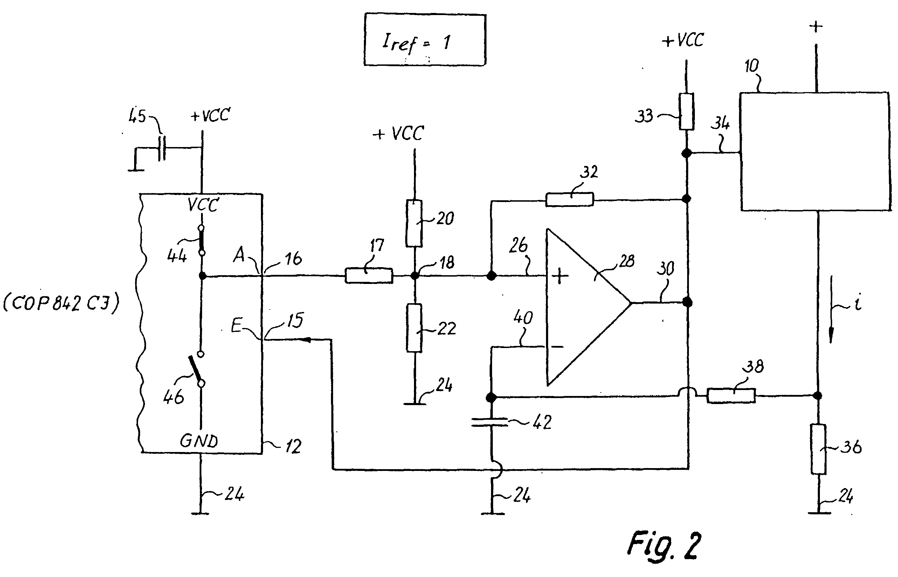

Der Mikrocontroller 12 hat einen Ausgang A, der drei Schaltzustände annehmen kann, wie nachfolgend anhand der Fig. 2 bis 4 ausführlich erläutert. An den Ausgang A ist über einen hochohmigen Widerstand 17 ein Knotenpunkt 18 angeschlossen, der über einen Widerstand 20 mit einer geregelten positiven Spannung V_{cc}, z.B. +5 V, und über einen Widerstand 22 mit Masse 24 verbunden ist.

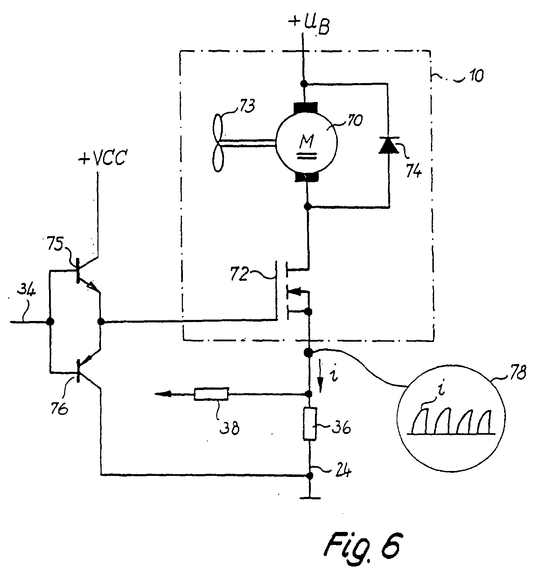

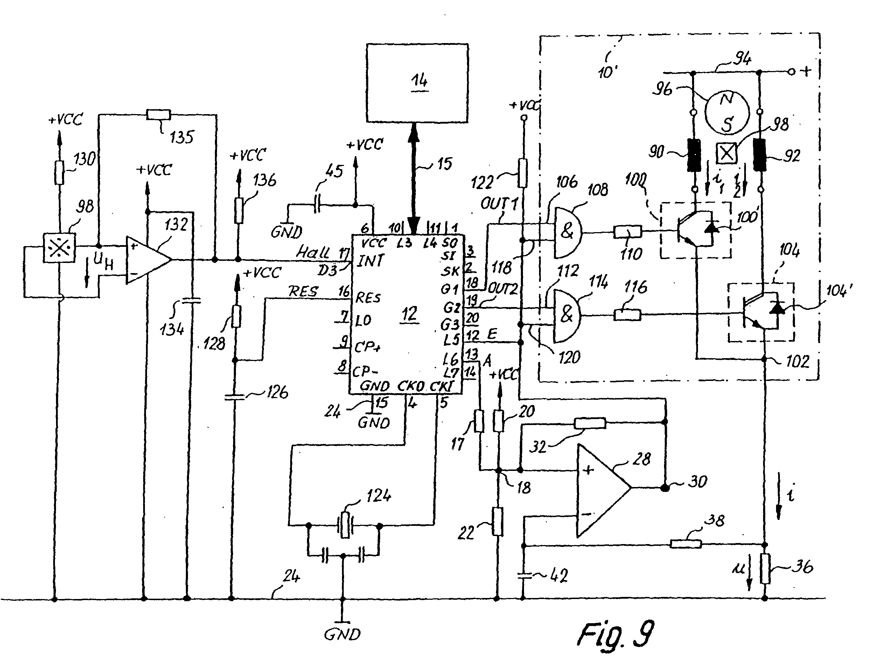

Der Knotenpunkt 18 ist mit dem positiven Eingang 26 eines Komparators 28 verbunden, dessen Ausgang 30 über einen Widerstand 32 (zur Einstellung der Schalthysterese) mit dem Eingang 26 verbunden ist, ebenso mit einem Eingang E des Mikrocontrollers 12, und - über einen Widerstand 33 - mit dem Potential V_{cc}. Der Ausgang 30 ist auch mit einem Eingang 34 der Motoranordnung 10 verbunden. (Die nachfolgenden Fig. 6 und 9 zeigen zwei Beispiele für eine solche Motoranordnung.) Bei einem niedrigen Signal am Eingang 34 wird die Energiezufuhr zur Motoranordnung 10 unterbrochen.

Die Motoranordnung 10 liegt in Reihe mit einem niederohmigen Meßwiderstand 36, dessen einer Anschluß mit Masse 24 verbunden ist. Durch den Motorstrom i erhält man am Widerstand 36 eine Spannung u, und diese wird über einen Widerstand 38 dem negativen Eingang 40 des Komparators 28 zugeführt. Der Eingang 40 ist über einen Kondensator 42 mit Masse 24 verbunden.

Der Widerstand 38 bildet zusammen mit dem Kondensator 42 einen Tiefpaß erster Ordnung, der, zusammen mit dem Rückführungswiderstand 32, die Frequenz der Strombegrenzung bestimmt, z.B. 15 bis 20 kHz. Diese Frequenz liegt bevorzugt oberhalb der höchsten Frequenz, die vom menschlichen Ohr wahrgenommen werden kann.

### Typische Werte der Bauelemente

| | |
|---|---|
| Mikrocontroller 12 | COP 842 CJ (National Semiconductor) |
| (Fig. 10 zeigt beispielhaft die Hersteller-Anschlußbezeichnungen 1 bis 20 dieses Mikrocontrollers 12, ebenso die von der Anmelderin verwendeten Port-Bezeichnungen, z.B. OUT1, OUT2, etc.) | |
| EEPROM 14 | 2-Wire Serial CMOS EEPROM AT24C01A (ATMEL) |
| Widerstand 22 | 47 kΩ |
| Widerst. 17, 20, 33 | 100 kΩ |
| Widerstand 32 | 1 MΩ |
| Widerstand 36 | 1 Ω |
| Widerstand 38 | 1 kΩ |
| Kondensator 42 | 22 nF |
| Kondensator 45 | 33 nF |
| Komparator 28 | LM2901 |

### Arbeitsweise

Zunächst soll - nur zur Erläuterung - angenommen werden, daß der Widerstand 17 den Wert Unendlich (∞) hat, so daß das Potential des Ausgangs A keinen Einfluß auf das Potential des Knotenpunkts 18 hat, welches in diesem Fall nur durch das Verhältnis der Widerstände 20 und 22 bestimmt ist.

Steigt der Strom i im Motor 10 an, so steigt die Spannung u am Meßwiderstand 36, und wenn diese das Potential am positiven Eingang 26 des Komparators 28 überschreitet, wird der zuvor hohe Ausgang 30 des Komparators 28 niedrig, wodurch der Strom in der Motoranordnung 10 unterbrochen wird.

Dadurch sinkt die Spannung u, der negative Eingang 40 des Komparators 28 wird wieder negativer als der positive Eingang 26, so daß der Ausgang 30 des Komparators 28 wieder hoch und der Strom durch die Motoranordnung 10 wieder eingeschaltet wird.

Wenn also der Motorstrom i so hoch wird, daß der Komparator 28 umschaltet, wird der Motorstrom i nach Art einer Pulsbreitenmodulation (PWM) ständig ausund eingeschaltet, wodurch der Motorstrom i auf einen vorgegebenen Wert I_{ref} begrenzt wird, der durch das Potential am Knotenpunkt 18 vorgegeben ist.

Der Ausgang A des Mikrocontrollers 12 ist bevorzugt ein sogenannter Tristate-Ausgang. **Fig. 2** zeigt den Zustand I_{ref} = 1, bei dem der Ausgang A über einen internen Schalter 44 (Transistor) mit der positiven Spannung V_{cc} verbunden ist, die über einen Kondensator 45 gesiebt wird. Dies bedeutet, daß der hochohmige Widerstand 17 (100 kΩ) zum Widerstand 20 (100 kΩ) parallelgeschaltet ist, wodurch das Potential des Knotenpunkts 18 höher wird, d.h. die Strombegrenzung beginnt in diesem Fall erst bei einem höheren Wert des Motorstroms i. Dieser Zustand ist beim Anlauf eines Motors erwünscht, da hierbei der Motorstrom kurzzeitig sehr hoch werden kann und deshalb die Strombegrenzung erst bei höheren Stromwerten einsetzen soll, um einen raschen Hochlauf des Motors 10 zu erreichen.

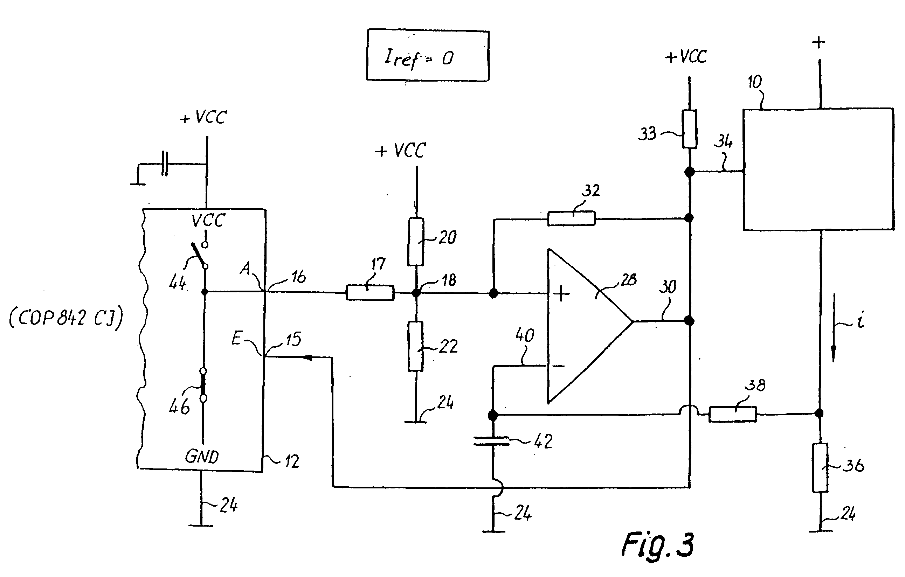

**Fig. 3** zeigt den Zustand I_{ref} = 0. Hierbei ist im Mikrocontroller 12 der Schalter 44 (Transistor) nichtleitend, und stattdessen ist ein Schalter 46 leitend, welcher den Ausgang A mit Masse 24 verbindet. Dadurch wird der Widerstand 17 parallel zum Widerstand 22 geschaltet, wodurch das Potential des Punktes 18 niedriger wird, d.h. die Strombegrenzung beginnt in diesem Fall schon bei einem niedrigen Strom im Motor 10. Dieser Zustand ist erwünscht, wenn der Motor 10 durch mechanische Einflüsse gebremst oder blockiert ist, da dann der Motor nicht durch elektrische Verluste überhitzt werden kann.

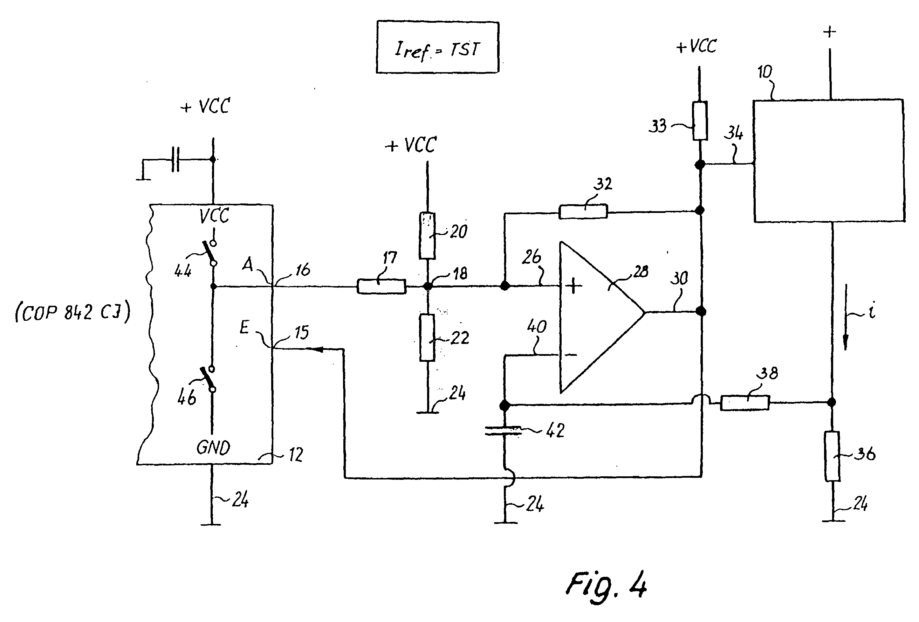

**Fig. 4** zeigt den Zustand I_{ref} = TST (Tristate). In diesem Zustand sind beide internen Schalter 44, 46 des Mikrocontrollers 12 nichtleitend, so daß der Ausgang A hochohmig ist. In diesem Fall hat der Widerstand 17 keinen Einfluß auf das Potential des Knotenpunkts 18, d.h. dieses Potential ist niedriger als bei I_{ref} = 1 und höher als bei I_{ref} = 0. Dies ist ein Zustand, wie er für den normalen Betrieb des Motors 10 verwendet werden kann.

Die Schalter 44, 46 im Mikrocontroller 12 sind Transistoren, die vom Programm des Mikrocontrollers 12 gesteuert werden, d.h. der Wert I_{ref} kann bei diesem Beispiel programmgesteuert auf drei verschiedene Werte 0, 1 oder TST eingestellt werden.

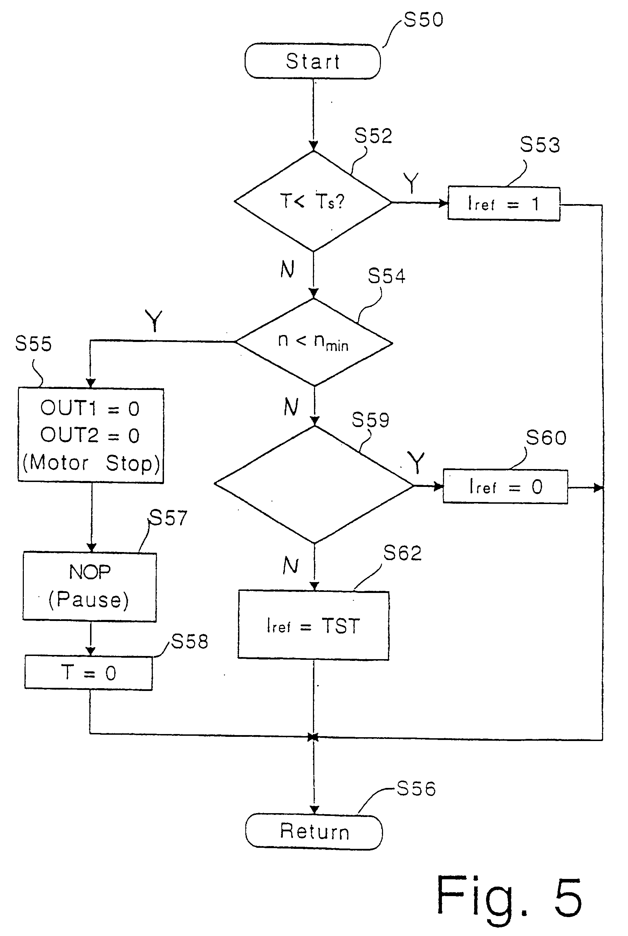

**Fig. 5** zeigt beispielhaft einen typischen Programmablauf. Beim Schritt S50 wird der Motor 10 initialisiert und gestartet und beginnt seinen Hochlauf, dessen Zeitdauer Tₛ aus dem EEPROM 14 entnommen wird, z.B. 3 Sekunden. Dieser Wert kann über den Bus 13, den Mikrocontroller 12, und den Bus 15 von außen in das EEPROM 14 eingegeben werden. Bei der Initialisierung (Schritt S50) wird dieser Wert, zusammen mit anderen Werten, aus dem EEPROM 14 in ein RAM im Mikrocontroller 12 eingelesen.

Im Schritt S52 wird überwacht, ob sich der Motor innerhalb der Hochlaufzeit Tₛ befindet. Falls dies der Fall ist, wird im Schritt S53 gesetzt I_{ref} = 1, d.h. der Schalter 44 wird geschlossen und der Schalter 46 geöffnet. Im Anschluß hieran geht das Programm zum Schritt S56 (Return) und beginnt einen neuen Durchlauf.

ist beim Schritt S52 die Hochlaufzeit Tₛ abgelaufen, so geht das Programm zum Schritt S54. Dort wird geprüft, ob die Motordrehzahl n unterhalb einer vorgegebenen Mindestdrehzahl nₘᵢₙ liegt. Dies kann bedeuten, daß der Motor blockiert ist, oder daß er zu langsam läuft. Lautet im Schritt S54 die Antwort Ja (Y), so wird im Schritt S55 der Motor abgeschaltet, z.B. indem bei Fig. 9 die beiden Signale OUT1 und OUT2 zu Null gemacht werden. - Die Drehzahl nₘᵢₙ wird bei der Initialisierung dem EEPROM 14 entnommen. Sie kann über den Bus 13 verändert werden, indem ein anderer Wert für nₘᵢₙ in das EEPROM 14 geladen wird.

Es folgt der Schritt S57, wo der Motor eine stromlose Pause erhält, z.B. von 5 Sekunden. Im anschließenden Schritt S58 wird die Zeit T für den Hochlauf (vergleiche S52) auf Null zurückgesetzt, und das Programm geht über den Schritt S56 (Return) zurück zum Start (S50) und versucht einen neuen Anlauf des Motors.

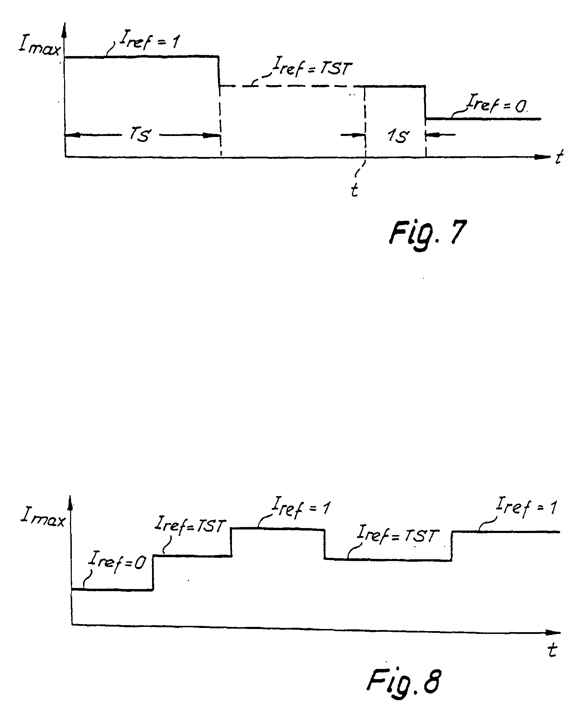

Ist im Schritt S54 die Antwort Nein (N), d.h. der Motor läuft mit einer Drehzahl n im normalen Bereich, so geht das Programm zum Schritt S59. Dort wird ständig geprüft, ob während der Gesamtdauer der vorhergehenden Sekunde (vgl. Fig. 7) am Eingang E Strombegrenzungssignale vorgelegen haben, d.h. ob die Strombegrenzung während der vorhergehenden Sekunde aktiv war. Falls dies der Fall ist, geht das Programm zum Schritt S60, und dort wird gesetzt I_{ref} = 0. d.h. der Motorstrom i wird ab jetzt auf einen niedrigen Wert begrenzt, damit der Motor 10 durch den Motorstrom nicht zu stark erwärmt wird. Anschließend geht das Programm zum Schritt S56 (Return).

Wird im Schritt S59 keine Aktivität der Strombegrenzung festgestellt, so geht das Programm zum Schritt S62, wo gesetzt wird I_{ref} = TST, d.h. die Strombegrenzung wird auf einen für den Normalbetrieb geeigneten Wert (Tristate; vgl. Fig. 4) eingestellt.

**Fig. 6** zeigt ein einfaches Beispiel für eine Motoranordnung 10, hier mit einem Gleichstrom-Kollektormotor 70, der mit einem Power-MOSFET-Transistor 72 in Reihe geschaltet ist und z.B. einen (symbolisch angedeuteten) Lüfter 73 antreibt. Eine Freilaufdiode ist mit 74 bezeichnet und zum Motor 70 antiparallel geschaltet. Zur Steuerung des Transistors 72 dienen ein npn-Transistor 75 und ein pnp-Transistor 76, deren Emitter miteinander und mit dem Gate des Transistors 72 verbunden sind. Der Kollektor des Transistors 75 ist mit V_{cc} verbunden, der des Transistors 76 mit Masse 24. Die Basen der Transistoren 75 und 76 sind miteinander und mit dem Anschluß 34 der Fig. 1 oder 12 verbunden.

Wenn am Eingang 34 ein niedriges Potential liegt, wird der Transistor 75 gesperrt und der Transistor 76 wird leitend, so daß der MOSFET 72 sperrt und den Strom zum Motor 70 unterbricht.

Hat der Eingang 34 ein hohes Potential, so wird der Transistor 75 leitend und der Transistor 76 sperrt, so daß der MOSFET 72 leitend wird und ein Strom i zum Motor 70 fließt, wie bei 78 dargestellt. Die Darstellung bei 78 gilt für den Zustand, bei dem die Strombegrenzung wirksam ist. - Die Schaltung nach Fig. 6 hat den Vorteil, daß die Motorspannung U_{B} von der Spannung V_{cc} unabhändig ist.

**Fig. 7** zeigt während der Zeit Tₛ den hohen Strom-Grenzwert I_{ref} = 1, danach im normalen Betrieb den Grenzwert I_{ref} = TST.

Zum Zeitpunkt t wird der Motor 10 blockiert, und eine Sekunde später schaltet die Strombegrenzung auf I_{ref} = 0 und begrenzt dadurch den Strom im Motor - programmgesteuert - auf einen niedrigen Wert.

**Fig. 8** zeigt, wie programmgesteuert (durch Werte im EEPROM 14) der Strom-Grenzwert I_{ref} abhängig von der Zeit zwischen seinen drei Werten umgeschaltet werden kann. Dies ermöglicht, wie in Fig. 8 dargestellt, die Programmierung eines sogenannten Softstarts, also eines weichen Anlaufs mit niedrigem Strom.

Wird ein Mikrocontroller 12 mit zwei Tristate-Ausgängen A, A' verwendet, wie in Fig. 1 angedeutet, so können mehr Strom-Grenzwerte erzeugt werden, indem der Ausgang A' über einen Widerstand 17' ebenfalls an den Knotenpunkt 18 angeschlossen wird, wobei der Widerstand 17' gewöhnlich einen anderen Widerstandswert haben wird als der Widerstand 17. Die Zahl der einstellbaren Grenzwerte beträgt 3 hoch der Zahl der Ausgänge, also z.B. bei einem Mikrocontroller mit zwei Tristate-Ausgängen A, A' 3^2 = 9 verschiedene Grenzwerte, bei drei Ausgängen A, A' und A" 27 verschiedene Grenzwerte, etc.

Bei der Erfindung erweist es sich als sehr vorteilhaft, daß über den Bus 13 bzw. das EEPROM 14 dem Mikrocontroller 12 beliebige Zustände und Zeiten für die Steuerung der Strombegrenzung vorgegeben werden können. Die über den seriellen Bus 13 übertragenen Daten werden im EEPROM 14 gespeichert und bleiben auch nach dem Abschalten der Spannung V_{cc} dort gespeichert und für einen nachfolgenden Motorbetrieb verfügbar. Dadurch kann man einen Motor für die jeweilige Antriebsaufgabe in optimaler Weise programmieren, ohne in der Schaltung dieses Motors Widerstände oder sonstige elektrische Elemente verändern zu müssen.

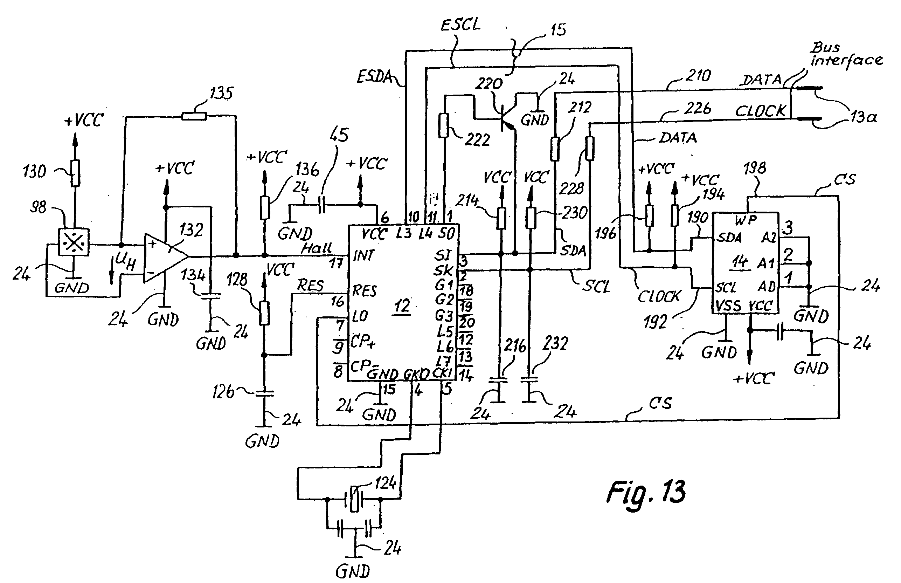

**Fig. 9** zeigt als Variante zu Fig. 6 eine Ausführung mit einem kollektorlosen Gleichstrommotor 10', wie er bevorzugt zum Antrieb von Lüftern verwendet wird. Die DE 2 346 380 C3 zeigt ein typisches Beispiel für den mechanischen Aufbau solcher Motoren. - Gleiche oder gleichwirkende Teile wie in den vorhergehenden Figuren werden mit denselben Bezugszeichen bezeichnet wie dort und gewöhnlich nicht nochmals beschrieben. Der externe Bus 13 und sein Interface 13a sind in Fig. 9 nicht dargestellt, sondern in Fig. 13. Das EEPROM 14 und sein Bus 15 sind in Fig. 9 nur schematisch angedeutet. Zu Einzelheiten vgl. Fig. 13.

Der Motor 10' hat zwei Wicklungsphasen 90, 92, die jeweils mit einem Anschluß an eine Plusleitung 94 mit z.B. 48 V angeschlossen sind. Ein permanentmagnetischer Rotor ist symbolisch bei 96 angedeutet. Wenn er sich dreht, steuert er mit seinem Magnetfeld einen Hallgenerator 98, der in Fig. 9 ganz links nochmals dargestellt. ist. Es sei darauf hingewiesen, daß die Strombegrenzung bei jeder Art von kollektorlosem Gleichstrommotor verwendet werden kann, also nicht nur bei einem Motor mit zwei Phasen, sondern ebenso bei einem Motor mit einer Phase, mit drei Phasen, etc.

Der andere Anschluß der Phase 90 ist über einen npn-Darlingtontransistor 100 an einen Knotenpunkt 102 angeschlossen, und der andere Anschluß der Phase 92 ist über einen npn-Darlingtontransistor 104 an dem Knotenpunkt 102 angeschlossen. Zwischen dem Knotenpunkt 102 und Masse 24 liegt der bereits beschriebene Strommeßwiderstand 36.

Antiparallel zu den beiden Darlingtontransistoren 100, 104 liegen Freilaufdioden 100', 104'. Leitet der Transistor 100, so fließt ein Strom i₁. Leitet der Transistor 104, so fließt ein Strom i₂. Beide Ströme werden durch die bereits beschriebene Strombegrenzungsanordnung auf den (variablen) Wert I_{ref} begrenzt.

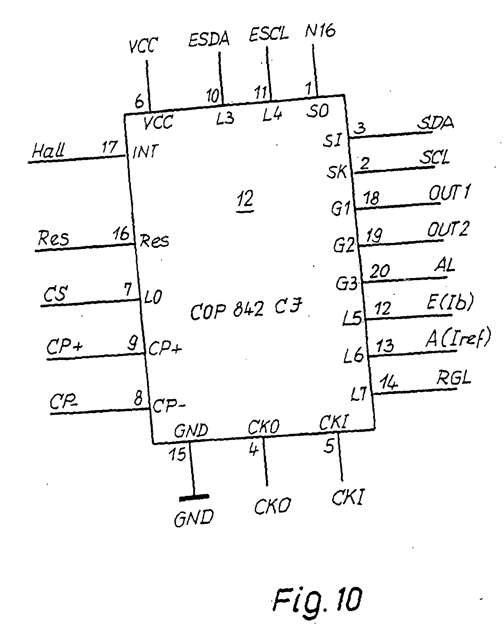

Der Ausgang G1 des Mikroprozessors 12, dessen Anschlüsse und Anschlußbezeichnungen in Fig. 10 im einzelnen dargestellt sind, führt zum Anschluß 106 eines UND-Glieds 108, dessen Ausgang über einen Widerstand 110 mit der Basis des Transistors 100 verbunden ist.

Der Ausgang G2 des Mikroprozessors 12 führt zum Eingang 112 eines UND-Glieds 114, dessen Ausgang über einen Widerstand 116 mit der Basis des Transistors 104 verbunden ist.

Der zweite Eingang 118 des UND-Glieds 108 und der zweite Eingang 120 des UND-Glieds 114 sind über einen Widerstand 122 (z.B. 100kΩ) mit der positiven Spannung Vcc verbunden, ferner mit dem Eingang E des Mikroprozessors 12, und dem Ausgang 30 des Komparators 28.

Wenn der Ausgang 30 des Komparators 28 niedrig ist, sperrt er beide UND-Glieder 108, 114 und verhindert so, daß das Signal OUT1 = 1 (am Port G1) den Transistor 100 einschaltet, oder daß das Signal OUT2 = 1 (am Port G2) den Transistor 104 einschaltet. Beim Einsetzen der Strombegrenzung wird also der gerade leitende Transistor 100 oder 104 durch das Signal am Ausgang 30 des Komparators 28 gesperrt, und über den Eingang E wird dieses Signal im Mikroprozessor 12 ausgewertet, vgl. Schritt S58 der Fig. 5.

Fig. 9 zeigt bei 124 einen Schwingquarz, der an die Anschlüsse CK0 und CK1 des Mikroprozessors 12 angeschlossen ist und dessen Taktfrequenz vorgibt, z.B. 4 MHz. Der Reset-Eingang Res ist über einen Kondensator 126 mit Masse 24 und über einen Widerstand 128 mit +V_{cc} verbunden. Diese beiden Bauelemente erzeugen in der üblichen Weise beim Einschalten einen Power-Up-Reset.

Der Hallgenerator 98, z.B. vom Typ HW1 01 A, ist zur Stromversorgung über einen Widerstand 130 (z.B. 3,3kΩ) mit + Vcc und direkt mit Masse 24 verbunden. Sein Ausgangssignal u_{H} wird den beiden Eingängen eines Komparators 132 (z.B. LM2901D) zugeführt, dessen V_{cc}-Eingang ein Siebkondensator 134 von z.B. 33 nF zugeordnet ist. Sein Ausgang ist über einen Rückführwiderstand 135 (z.B. 100 kΩ) mit dem positiven Eingang und über einen sogenannten Pullup-Widerstand 136 (z.B. 33 kΩ) mit + V_{cc} verbunden, und direkt mit dem Port INT (Fig. 10) des Mikroprozessors 12, so daß man an diesem im Betrieb ein Signal HALL erhält, das vom Rotormagneten 96 gesteuert wird. Dieses Signal hat deshalb immer während einer Rotordrehung von 180° el. den Wert HALL = 0, und während der anschließenden Drehung von 180° el. den Wert HALL = 1.

**Fig. 11** zeigt die Kommutierung des Motors 10' durch den Mikroprozessor 12. Beim Schritt S140 erfolgt der Start, z.B. Einschalten des Motors 10', Initialisierung mit den Werten aus dem EEPROM 14, etc.

Im Schritt S142 wird der Hall-Port INT abgefragt. Ist das Signal an diesem gleich "0", so geht das Programm zum Schritt S144, und es wird OUT1 = 1 und OUT2 = 0, d.h. der Transistor 100 wird eingeschaltet, und der Transistor 104 wird ausgeschaltet, so daß in der Wicklungsphase 90 ein Strom i1 fließt. Dieser Zustand im Schritt S144 bleibt gespeichert, bis eine Änderung des Signals HALL festgestellt wird.

Anschließend geht das Programm zum Schritt S146, wo z.B. die Routine gemäß Fig. 5 ausgeführt wird, und das Programm geht dann über die Schleife S148 zurück zum Schritt S142.

Wird in S142 festgestellt, daß HALL = 1 ist, so geht das Programm zum Schritt S150, und dort wird gesetzt OUT1 = 0 (Transistor 100 wird abgeschaltet) und OUT2 = 1 (Transistor 104 wird eingeschaltet), so daß nun ein Strom i₂ durch die Phase 92 fließt.

Beim Einsetzen der Strombegrenzung dann, wenn der Strom i durch den Meßwiderstand 36 zu hoch wird, wird der jeweils leitende Transistor 100 oder 104 gesperrt.

Durch (internes) Umschalten des Ausgangs A des Mikrocontrollers 12 kann der Strom-Grenzwert I_{ref} programmgesteuert auf drei verschiedene Grenzwerte I_{ref} umgeschaltet werden, wie bereits ausführlich beschrieben.

Nimmt man an, daß in den Fig. 1 bis 4 die beiden Widerstände 17 und 20 den Wert 100 kΩ haben, und der Widerstand 22 den Wert 47 kΩ, und daß die Spannung V_{cc} +5 V beträgt, so hat bei Fig. 2 der Punkt 18 das Potential 2,5 V, bei Fig. 4 das Potential 1,6 V, und bei Fig. 3 das Potential 1,24 V.

Dies sind relativ hohe Spannungen, und deshalb muß auch der Meßwiderstand 36, durch den der Motorstrom i fließt, entsprechend groß sein, damit die Spannung u an diesem Widerstand größer wird als die genannten Potentiale (1,24 V, 1,6 V, oder 2,5 V), und dadurch die Strombegrenzung aktiviert wird.

Hierdurch entstehen im Betrieb ständig entsprechende Verluste im Widerstand 36, was unerwünscht ist, weil es den Wirkungsgrad des Motors reduziert.

Macht man andererseits den Widerstand 22 wesentlich kleiner als den Widerstand 20, so hat es nur eine sehr geringe Wirkung, wenn beim Zustand gemäß Fig. 3 der hochohmige Widerstand 17 parallel zum niederohmigen Widerstand 22 geschaltet wird. (Der Widerstand 17 muß hochohmig sein, da die Ströme durch den Mikrocontroller 12 einen bestimmten, sehr niedrigen Wert nicht überschreiten dürfen.)

Die Schaltung nach **Fig. 12** bringt hier eine Verbesserung, weil bei ihr die Verluste im Meßwiderstand 36 kleiner werden, d.h. man kann dem Meßwiderstand 36 einen niedrigeren Widerstandswert geben. Gleiche oder gleichwirkende Teile wie in den vorhergehenden Figuren werden in Fig. 12 mit denselben Bezugszeichen bezeichnet und gewöhnlich nicht nochmals beschrieben.

Der Knotenpunkt 18 ist hier nicht direkt mit dem positiven Eingang 26 des Komparators 28 verbunden, sondern über einen zweiten, hochohmigen Spannungsteiler 160. Dieser enthält einen ersten Widerstand 162 zwischen dem Knotenpunkt 18 und dem positiven Eingang 26 des Komparators 28, sowie einen zweiten Widerstand 164 zwischen dem positiven Eingang 26 und Masse 24. Der Abgriff dieses zweiten Spannungsteilers 160 ist mit 163 bezeichnet und direkt mit dem positiven Eingang 26 verbunden. Wird z.B. der Widerstand 162 zu 1 MΩ gewählt, und der Widerstand 164 zu 100 kΩ, so beträgt das Potential am positiven Eingang 26 nur etwa 1/11 des Potentials am Punkt 18, und der Wert des Meßwiderstands 36 kann deshalb, im Vergleich zu Fig. 1 bis 4, auf etwa 1/10 reduziert werden, ebenso die Verluste an diesem Widerstand, was den Wirkungsgrad des Motors entsprechend verbessert. Da die Widerstände 162, 164 z.B. zusammen einen Wert von 1,1 MΩ haben, der Widerstand 22 dagegen z.B. nur von 47 kΩ, wird durch den Spannungsteiler 160 die Höhe des Potentials am Punkt 18 nur wenig beeinflußt.

### Beispielhafte Werte zu Fig. 12

| | |
|---|---|
| Mikrocontroller 12 | COP 842 CJ (National Semiconductor) |
| (Fig. 10 zeigt die Hersteller-Anschlußbezeichnungen 1 bis 20 dieses Mikrocontrollers 12, ebenso die von der Anmelderin verwendeten Port-Bezeichnungen, z.B. OUT1, OUT2, etc.) | |
| EEPROM 14 | 2-Wire Serial CMOS EEPROM AT24C01A (ATMEL) |
| Widerstand 22 | 47 kΩ |
| Widerst. 17, 20, 33, 164 | 100 kΩ |
| Widerstand 32 | 1 MΩ |
| Widerstand 36 | 0,1 Ω |
| Widerstand 38 | 1 kΩ |
| Kondensator 42 | 22 nF |
| Komparator 28 | LM2901 |
| Widerstand 162 | 1 MΩ |
| Widerstand 164 | 100 kΩ. |

Die Arbeitsweise ist gleich wie bei Fig. 1 beschrieben, doch kann der Widerstand 36 bei dieser Ausführungsform einen wesentlich niedrigeren Wert haben, da durch den hochohmigen Spannungsteiler 160 die einstellbaren Vergleichsspannungen am positiven Eingang 26 wesentlich herabgesetzt werden, bei diesem Beispiel auf Werte von etwa 0,12, 0,16 oder 0,25 V, so daß die Strombegrenzung einsetzt, wenn die Spannung u am Meßwiderstand 36 die durch den Mikrocontroller 12 eingestellte, niedrige Spannung am positiven Eingang 26 überschreitet.

**Fig. 13** ergänzt die Darstellung der Fig. 9, d.h. in Fig. 9 sind bestimmte Merkmale der Fig. 13 wegen Platzmangel nicht oder nur schematisch dargestellt, und umgekehrt sind in Fig. 13 bestimmte Merkmale der Fig. 9 nicht dargestellt. Fig. 9 betrifft im wesentlichen den Motorteil, und Fig. 13 das Interface 13a für den Busanschluß, sowie den Anschluß des EEPROM 14. Gleiche oder gleich wirkende Teile wie in den vorhergehenden Figuren sind mit denselben Bezugszeichen bezeichnet wie dort und werden gewöhnlich nicht nochmals beschrieben.

Das EEPROM 14 erhält an seinem Dateneingang (SDA) 190 das Signal ESDA vom Port L3 (vgl. Fig. 10) des Mikrocontrollers 12. Ebenso erhält sein Clockeingang (SCL) 192 das Taktsignal ESCL vom Port L4 (Fig. 10) des Mikrocontrollers 12. Der Eingang 190 ist über einen Widerstand 196 mit V_{cc} verbunden, der Eingang 192 über einen Widerstand 194.

Der Schreibschutzeingang (WP) 198 des EEPROM 14 ist über eine Leitung CS (= Chip Select) mit dem Port LO (Fig. 10) des Mikrocontrollers 12 verbunden. Nur wenn das Signal an LO hoch ist, können Daten in das EEPROM 14 geschrieben werden. Ist dieses Signal niedrig, so ist das EEPROM 14 schreibgeschützt. Die Anschlüsse VSS, AD, A1 und A2 des EEPROM 14 sind mit Masse 24 verbunden, und der Eingang VCC mit der Spannung Vcc, wie dargestellt.

Die Leitungen ESDA und ESCL stellen also den seriellen Bus 15 des EEPROM 14 dar, über den der Datenverkehr vom und zum EEPROM 14 fließt. Im Normalfall wird das (im Motor eingebaute) EEPROM 14 in der Fabrik einmal (über den seriellen Bus 13) programmiert, und sein Anschluß 198 bleibt anschließend während der vollen Lebensdauer des Motors auf einem niedrigen Potential, doch ist im Prinzip jederzeit eine Neuprogrammierung oder Umprogrammierung des EEPROM 14 möglich wenn man den Schreibschutz aufhebt.

Fig. 13 zeigt auch Einzelheiten des Bus-Interface 13a zum externen Bus 13 (Fig. 1). Zum Interface 13a führt eine Datenleitung 210 (DATA), die über einen Widerstand 212 an den Port SI (Fig. 10) des Mikrocontrollers 12 angeschlossen ist. Vom Port SI führt auch ein Widerstand 214 zu V_{cc}, und ein Kondensator 216 zu Masse 24. Außerdem ist der Port SI mit dem Emitter eines pnp-Transistors 220 verbunden, dessen Kollektor mit Masse 24 und dessen Basis über einen Widerstand 222 mit dem Port SO (vgl. Fig. 10) des Mikrocontrollers 12 verbunden ist.

Das Interface 13a hat femer eine Taktleitung (CLOCK) 226, die über einen Schutzwiderstand 228 mit dem Port SK (Fig. 10) des Mikrocontrollers 12 verbunden ist. Dieser ist auch über einen Widerstand 230 mit V_{cc} verbunden, und über einen Kondensator 232 mit Masse 24.

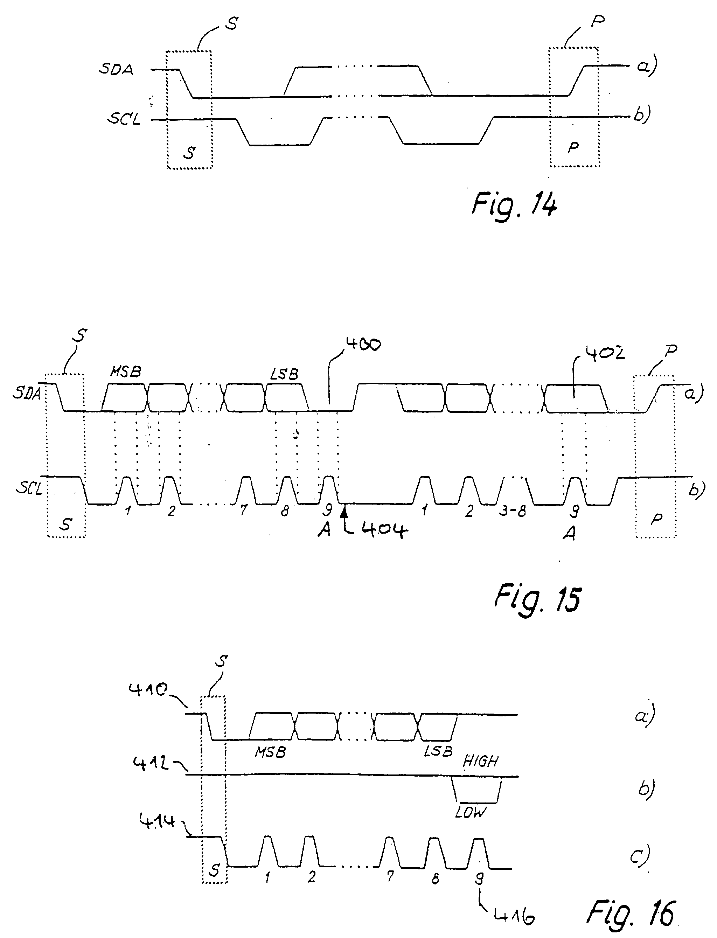

Das Bus-Interface 13a wird regelmäßig im Mikrocontroller 12 abgefragt, ob dort eine Signaländerung vorliegt (Slave-Betrieb), und wenn dies der Fall ist, werden im Mikrocontroller 12 die entsprechenden Abläufe eingeleitet, wie das nachfolgend anhand der Fig. 14 bis 18 näher beschrieben wird.

Für die serielle Datenübertragung hat der beim Ausführungsbeispiel verwendete Mikrocontroller 12 (COP 842 CJ) ein serielles Interface mit einer Taktleitung SCL (Serial Clock), einer Dateneingangsleitung SI (Serial In) und einer Datenausgangsleitung SO (Serial Out). Dies ist also ein Dreileitungssystem, während ein I²C-Bus mit nur zwei Leitungen arbeitet, nämlich der Leitung 210 für Daten (SDA) und der Leitung 226 für das Taktsignal (SCL).

Zur Umsetzung des Dreileitersystems (SO, SI und SCL) auf das Zweileitersystem 210, 226 dient der pnp-Transistor 220. Dieser verbindet den Datenausgang SO über eine Kollektorschaltung mit der Leitung 210 für die Daten. Der pnp-Transistor 220 wird deshalb verwendet, damit die Ausgangssignale am Port SO nicht invertiert werden.

Der Dateneingang SI ist - über den Schutzwiderstand 212 - direkt mit der Datenleitung 210 verbunden. Die Pullup-Widerstände 214, 230 stellen sicher, daß an den Leitungen 210, 226 jederzeit ein definierter Spannungspegel vorhanden ist.

Auf diese Weise läßt sich hier in sehr vorteilhafter Weise ein I²C-Bus im Slave-Betrieb implementieren.

### Typische Werte zu Fig. 13

| | |
|---|---|
| Mikrocontroller 12 | COP 842 CJ (National Semiconductor) |
| (Fig. 10 zeigt die Hersteller-Anschlußbezeichnungen 1 bis 20 dieses Mikrocontrollers 12, ebenso die von der Anmelderin verwendeten Port-Bezeichnungen, z.B. OUT1, OUT2, etc.) | |
| EEPROM 14 | 2-Wire Serial CMOS EEPROM AT24C01A (ATMEL) |
| Transistor 220 | BC856B |
| Widerstände 194, 196 | 22 kΩ |
| Widerstände 214, 230 | 47 kΩ |
| Widerstand 222 | 100 kΩ |
| Widerstände 212, 228 | 47 Ω |
| Kondensatoren 216, 232 | 33 nF |

### Arbeitsweise von Fig. 13

Die Datenübertragung auf dem internen Bus 15 erfolgt nach dem Protokoll des I²C-Busses, wie in der eingangs genannten Literaturstelle beschrieben, wobei der Mikrocontroller 12 der Master und das EEPROM 14 der Slave ist. Das Speichern neuer Daten im EEPROM 14 ist nur möglich, wenn das Signal auf der Leitung CS hoch ist. Wenn dieses Signal niedrig ist, können nur gespeicherte Daten aus dem EEPROM 14 zum Mikrocontroller 12 übertragen werden. Dies geschieht hauptsächlich bei der Initialisierung nach dem Einschalten des Motors, wo die benötigten Daten aus dem EEPROM 14 in das RAM 330 (Fig. 20) im Mikrocontroller 12 übertragen werden.

**Fig. 14** zeigt für das Protokoll eines I²C-Busses bei S die Startbedingung und bei P die Stoppbedingung. Die Startbedingung S ist gegeben bei einem Wechsel der Datenleitung (SDA) 210 von Hoch nach Niedrig, wenn gleichzeitig die Taktleitung (SCL) 226 auf Hoch liegt. Dabei werden die Kommunikationspuffer (Pufferspeicher 332 in Fig. 20) gelöscht, und die Kommunikation wird auf einen aktiven Status gesetzt. Der Bytezähler wird zurückgesetzt. (Kommunikationspuffer 332 und Bytezähler befinden sich im RAM 330 des Mikrocontrollers 12).

Die Stoppbedingung P (Fig. 14) ist gegeben bei einem Wechsel der Datenleitung (SDA) 210 von Niedrig nach Hoch, wenn gleichzeitig die Taktleitung (SCL) 226 auf Hoch liegt. Bei einem schreibenden Zugriff auf den Mikrocontroller 12 werden die Daten in die betreffenden Kommunikationspuffer 332 (Fig. 20) geschrieben. Nach der Stoppbedingung wird der Kommunikationsstatus deaktiviert. Nun erst werden die Daten in das RAM 330 oder das EEPROM 14 geschrieben.

**Fig. 15** zeigt den Bitstrom bei einer Übertragung auf dem I²C-Bus. Es bedeuten:
- MSB =: höchstes Bit
- LSB =: niedrigstes Bit
- A =: Bestätigung
- S =: Startbedingung
- P =: Stoppbedingung.

Bei 400 und 402 kommt jeweils eine Bestätigung des Empfängers. Bei 404 ist das Byte vollständig übertragen.

**Fig. 16** zeigt bei a) die Daten 410, die vom Sender erzeugt werden, und bei b) die Daten 412, die vom Empfänger erzeugt werden. In Fig. 16b) bedeutet
HIGH = no acknowledge (übersetzt: Signal hoch = keine Bestätigung),
und
LOW = acknowledge (übersetzt: Signal niedrig = Bestätigung).

Fig. 16c) zeigt das Taktsignal SCL 414 vom Master, wobei der neunte Taktimpuls 416 der Taktimpuls für die Bestätigung A ist.

Im Kommunikationsmodus "Empfangen" wird nach der steigenden Flanke auf der Taktleitung (SCL) 226 das entsprechende Datenbit von der Datenleitung (SDA) 210 empfangen, also eingelesen.

Im Kommunikationsmodus "Senden" wird nach fallender Flanke auf der Taktleitung (SCL) 226 das nächste Bit auf der Datenleitung 210 ausgegeben (über den Transistor 220).

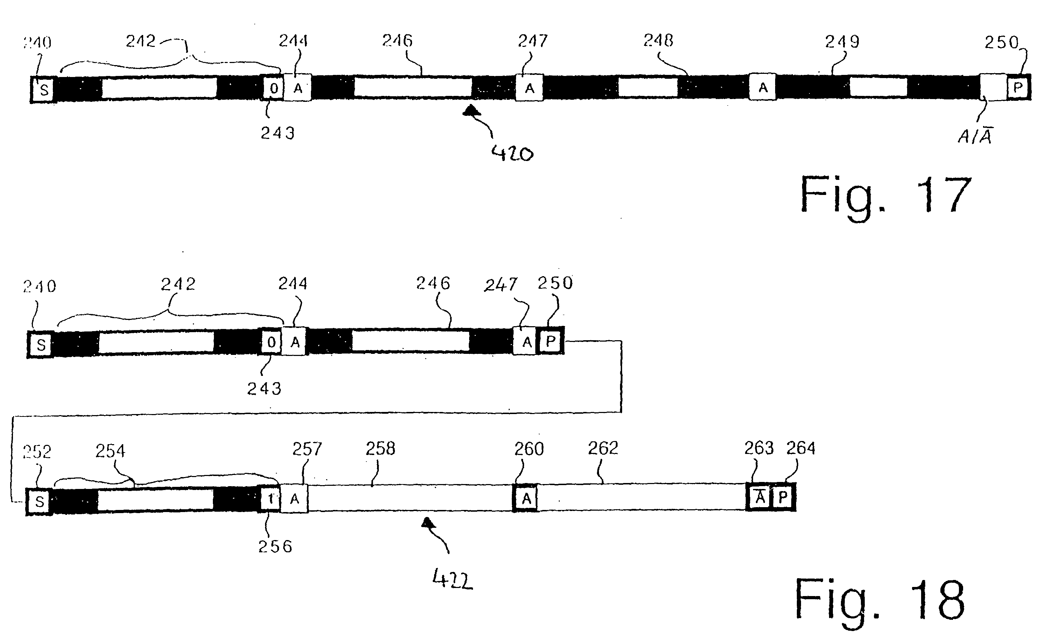

**Fig. 17** zeigt den Kommunikationsablauf 420 "Objekt Schreiben". Hierbei, wie auch in Fig. 18, bedeuten
- S =: Startbedingung (vgl. Fig. 14)
- P =: Stoppbedingung (vgl. Fig. 14)
- Dunkel hervorgehoben:: Vom Master zum Slave
- Weiß hervorgehoben:: Vom Slave zum Master
- A =: Bestätigung (Datenleitung SDA 210 Niedrig)
- A/ =: Nichtbestätigung (Datenleitung SDA 210 Hoch).

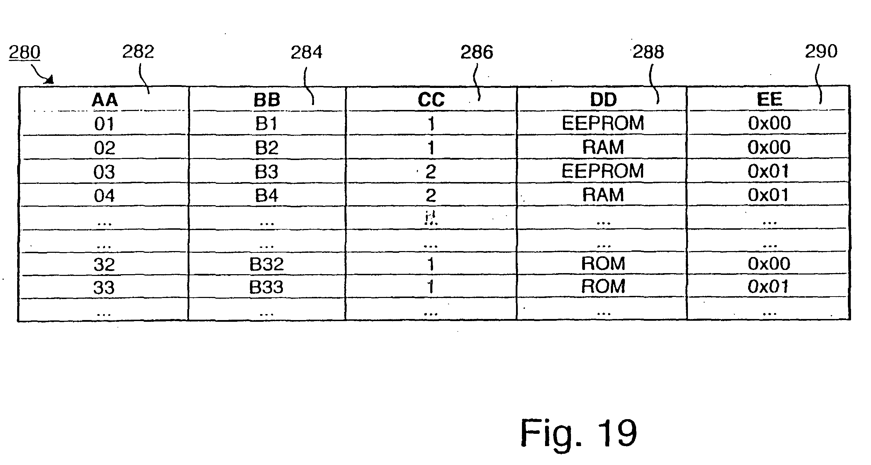

Eine vollständige Kommunikation, bei der ein Objekt an den Slave gesendet wird, besteht aus einer Startbedingung "S" 240, nach der acht Bits 242 empfangen werden, die ggf. mit einem Bestätigungssignal A 244 quittiert werden. Diese acht Bits 242 setzen sich zusammen aus sieben Bits Slave-Adresse und einem Lese-Schreiben-Bit 243, das hier den Wert "0" hat (für Schreiben). Wenn die Slave-Adresse 242 mit der Geräteadresse (324 in Fig. 20) übereinstimmt, wird die Bestätigung A gesendet, und es wird als nächstes die Objektadresse 246 empfangen und bei 247 bestätigt. In der Objekttabelle 280 der Fig. 19 steht (in Spalte 286) eine Information über die Objektlänge, welche der Objektadresse 246 zugeordnet ist. Daraus ergibt sich, wie viele Datenblöcke (Bytes) übertragen werden müssen.

Es folgt die Übertragung der entsprechenden Zahl von Datenblöcken 248, 249 und der Stoppbedingung "P" 250. Danach werden die Daten in denjenigen Speicher übernommen, der sich aus der Objekttabelle 280 ergibt und dort in den Spalten 288, 290 angegeben ist (Fig. 19).

Die Adresse 324 eines Geräts (Fig. 20) kann innerhalb eines Bussystems vom Master 11 (Fig. 20) frei vergeben werden und wird dann im EEPROM 14 des betreffenden Motors 10 oder 10' nichtflüchtig gespeichert.

**Fig. 18** zeigt den Kommunikationsablauf bei "Objekt Lesen". Dieser Ablauf wird nachfolgend in Verbindung mit Fig. 20 näher beschrieben. Teile von Fig. 18, die mit Fig. 17 übereinstimmen, sind mit denselben Bezugszeichen versehen wie dort.

**Fig. 19** zeigt beispielhaft eine Objekttabelle 280, wie sie im ROM 336 (Fig. 20) des Mikrocontrollers 12 fest gespeichert ist, bevorzugt als Bestandteil der Hardware des Mikrocontrollers 12.

Hierbei bedeuten die jeweiligen Felder
- AA: Objektadresse
- BB: Objektname
- CC: Anzahl Byte
- DD: Speichermedium
- EE: Hardwareadresse
und in der Spalte 284 (Objektname) bedeuten die Felder
- B1: Steuerwort Init
- B2: Statuswort
- B3: Solldrehzahl
- B4: Istdrehzahl
- B32: Hersteller
- B33: Softwareversion

Die Objekttabelle 280 enthält (in dieser graphischen Darstellung) eine Spalte 282 mit Objektadressen, eine Spalte 284 mit Objektnamen, eine Spalte 286 mit der Länge des betreffenden Objekts (1 oder 2 Byte), eine Spalte 288 mit der Angabe des Speichermediums (hier: RAM, ROM oder EEPROM), und schließlich eine Spalte 290 mit der Hardwareadresse.

Z.B. hat die im Gerät verwendete Version der Software die Objektadresse "33", den Objektnamen "Softwareversion" (Feld B33), und die Länge von einem Byte. Sie befindet sich im ROM (336) des Mikrocontrollers 12 und hat die Hardwareadresse "0x01" im ROM 336. Bevorzugt wird die Hardwareadresse in Form eines Hexadezimalworts angegeben.

Die augenblickliche Drehzahl, die sich aus dem Signal "Hall" ergibt, hat die Objektadresse "04", den Objektnamen "Istdrehzahl" (Feld B4), und sie hat eine Länge von zwei Bytes, befindet sich im RAM 330 (des Mikrocontrollers 12), und hat dort die Hardwareadresse "0x01", ebenfalls in Form eines Hexadezimalworts.

Im allgemeinen wird man so vorgehen, daß man das erste Objekt im EEPROM 14 dort unter der Adresse "0x00" ablegt, das zweite Objekt unter "0x01", etc. In gleicher Weise verfährt man im RAM, d.h auch dort hat das erste Objekt die Hex-Adresse "0x00", das zweite Objekt "0x01" etc. Die Objekttabelle 280 kann im ROM 336 bei einer geeigneten, festgelegten Adresse beginnen.

Wird in der Objekttabelle 280 die Hardwareadresse eines Objekts gelesen, so wird also ein Hexwort gelesen, und dazu die Angabe, ob dieses Objekt im RAM 330, im ROM 336, oder im EEPROM 14 gespeichert oder zu speichern ist. Außerdem ergibt sich aus der Objekttabelle 280 die Länge des adressierten Objekts,

**Fig. 20** zeigt in stark schematisierter Form die Verteilung verschiedener Objekte auf die im Gerät (Lüfter) vorhandenen Speicher.

Die Bedeutung der verwendeten Bezeichnungen wird in der folgenden Liste angegeben:
- A1: Puffer A
- A2: Puffer B
- A3: Puffer C
- A4: Puffer D
- A5: Puffer E
- A6: Puffer F
- A10: Statuswort
- A11: Istdrehzahl
- A12: Iref
- A13: Betriebsstunden
- A14: Adresse Gerät
- O1: Hersteller
- O2: Softwareversion
- O3: Objekttabelle
- X1: Adresse Gerät
- X2: Solldrehzahl
- X3: Betriebsstunden
- X4: Fabriknummer
- X5: Steuerwort Init
- X6: Iref Start
- Y1: Prozessor

Im EEPROM 14 befinden sich die Adresse (X1) 324 des Geräts, die Solldrehzahl (X2), die Betriebsstundenzahl (X3), die Fabriknummer (X4), das Steuerwort Init (X5), der Stromgrenzwert I_{ref} für den Start (X6) und weitere Daten.

Beim Start des Motors 10, und bei jedem Resetvorgang, erfolgt eine Initialisierung, und dabei werden über den I²C-Bus 15 verschiedene Daten aus dem EEPROM 14 in das RAM 330 des Mikrocontrollers 12 übertragen, z.B. wie angegeben die Zahl der Betriebsstunden (A13), die Adresse 324 des Geräts (A14), und der Strom-Grenzwert I_{ref} für den Start (A12). Dies sind hauptsächlich die Werte, die der Motor vor seinem Anlauf benötigt.

Im RAM 330 befinden sich auch Pufferspeicher (Kommunikationsspeicher) 332. beispielhaft genannt Puffer A (A1) bis Puffer E (A6), von denen jeder ein Byte speichern kann. Ferner befindet sich dort ein Statusregister 334, das die aktuellen Werte SDA und SCL (auf den Leitungen 210 bzw. 226) enthält, ferner die bei der vorhergehenden Abfrage erhaltenen Werte SDA-A und SCL-A.

Im Betrieb werden die Leitungen 210, 226 des I²C-Bus 13 ständig abgefragt, z.B. immer nach 0,5 ms, oder nach 1 ms, um festzustellen, ob sich auf ihnen Signaländerungen ergeben. Solche Änderungen kommen in diesem Fall über den Bus 13 von einem Computer 11, der als Master arbeitet und z.B. regelmäßig eine Abfrage der Istdrehzahl im RAM (330) des Mikrocontrollers 12 vornimmt.
Die Zahl der Abfragen pro Sekunde bestimmt die Übertragungsrate auf dem Bus 13, z.B. 1000 Bd. Diese richtet sich nach den Bedürfnissen der Anwendung. Wird z.B. das Gerät nur einmal in seinem Leben programmiert, so spielt dabei die Übertragungsrate keine Rolle. Bei einer Anwendung in einem Regelsystem wird eine Übertragungsrate von 1000 Bd in den meisten Fällen ausreichen, wobei selbstverständlich die Zahl der an den Bus 13 angeschlossenen Geräte eine wichtige Rolle spielt. Die Übertragung der Daten vom und zum Gerät erfolgt über den Bus 13, also mittels der beiden Leitungen 210, 226 der Fig. 13.

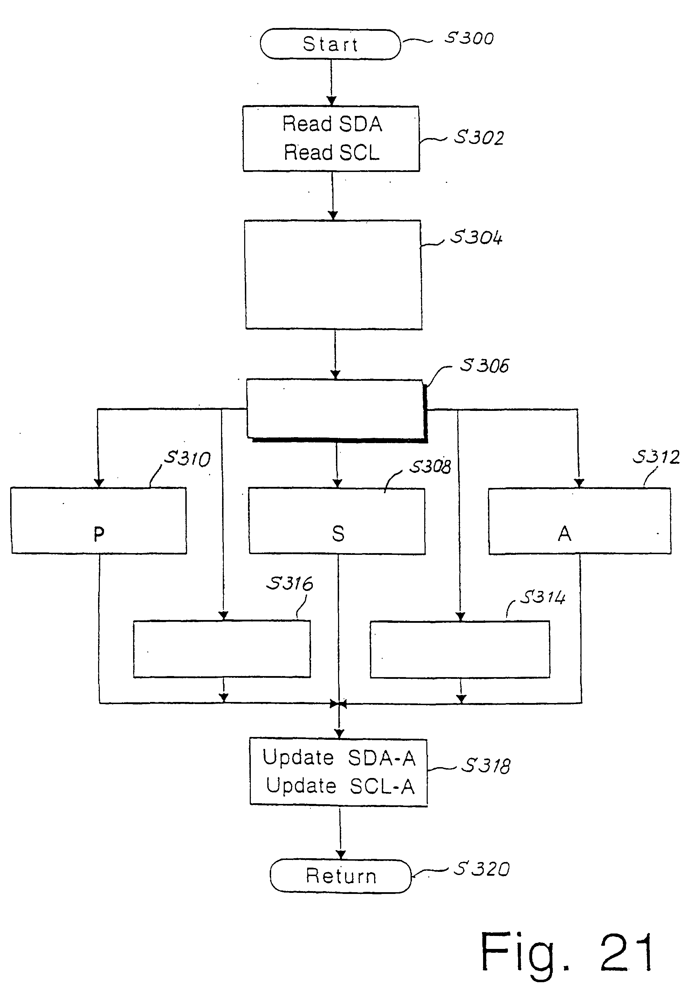

**Fig. 21** zeigt die Abläufe bei einer Abfrage dieser Leitungen. Der Schritt S300 ist der Start. Im Schritt S302 werden die augenblicklichen Werte SDA und SCL auf den Leitungen 210, 226 gelesen, und im Schritt S304 mit den Werten SDA-A und SCL-A im Statusspeicher 334 verglichen, die beim vorhergehenden Durchlauf gespeichert worden waren. Man vergleicht also im Schritt S304 SDA mit SDA-A, und SCL mit SCL-A.

Wie Fig. 14 zeigt, bedeutet eine Änderung des Werts SDA von "1" nach "0" dann eine Startbedingung S, wenn der Wert SCL dabei den Wert "1" beibehält. Derartige Änderungen werden im Schritt S304 festgestellt, ausgewertet, und einer Sprungtabelle S306 zugeführt, die z.B. bei Feststellung einer Startbedingung "S" zum Schritt S308 geht, welcher im Programm die Funktion "Startbedingung" auslöst. Analog kann das Programm von der Sprungtabelle S306 zur Stoppbedingung "P" (S310) gehen, die ebenfalls in Fig. 14 erläutert ist, oder zu einer Bestätigung "A" (S312), die in Fig. 16b erläutert ist, oder zu "Byte senden" in S314. oder zu "Byte empfangen" in Schritt S316. Die Schritte S310 bis S316 lösen jeweils im Prozessor 12 die entsprechenden Abläufe aus, d.h. dort wird die entsprechende Funktion aufgerufen.

Anschließend geht das Programm zum Schritt S318, wo die Werte von SDA-A und SCL-A im Statusregister 334 aktualisiert werden. Es folgt Return im Schritt S320, also der Abschluß dieser Routine.

In Fig. 21 lauten also die Beschriftungen
- S304: "Vergleiche SDA mit SDA-A, Vergleiche SCL mit SCL_A"
- S306: "Sprungtabelle"
- S308: "Startbedingung S"
- S310: "Stopbedingung P"
- S312: "Bestätigung A"
- S314: "Byte senden"
- S316: "Byte empfangen"

Soll in Fig. 20 die Istdrehzahl durch den PC 11 abgefragt werden, so eröffnet dieser gemäß Fig. 18 die Kommunikation mit der Startbedingung 240 (Fig. 18 betrifft den Vorgang 422, nämlich "Objekt lesen"). Das nachfolgende erste Byte 242 erhält in den Bits 1 bis 7 die Adresse des adressierten Geräts, und in Bit 8 (dem niedrigsten Bit 243) eine "0" für "Schreiben".

Die Bits 1 bis 7, also die Adresse, werden im Mikrocontroller 12 mit der Adresse 324 im RAM 330 verglichen. Stimmen die Bits 1 bis 7 im Teil 242 mit der Adresse 324 überein, wird anschließend das Bit 8 geprüft. Stimmt die Adresse nicht überein, so schaltet sich der Mikrocontroller 12 von der Kommunikation über den Bus 13 ab. (An den Bus 13 können andere Geräte mit anderen Adressen angeschlossen sein, z.B. zwanzig andere Geräte, die mit dem in Fig. 20 dargestellten Gerät parallel arbeiten und je nach Bedarf durch den PC 11 separat ein- und ausgeschaltet oder sonstwie gesteuert werden).

Wurde die Adresse 242 geprüft und das Bit 243 (für "Schreiben") kontrolliert, so sendet der Mikrocontroller 12 das Bestätigungssignal "A" (244 in Fig. 18). Nach Erhalt des Signals 244 sendet der PC 11 die Objektadresse 246, hier z.B. gemäß Fig. 19 die Objektadresse "04" (Istdrehzahl), nämlich des Objekts. das der PC 11 anschließend lesen möchte. Nach dem Bestätigungssignal "A" 247 (vom Mikrocontroller 12) sendet der PC 11 eine Stoppbedingung "P", die in Fig. 18 mit 250 bezeichnet ist.

Anhand der Objektadresse 246 wird nun aus der Objekttabelle 280 ermittelt, daß das Objekt, hier z.B. die Istdrehzahl, aus zwei Bytes besteht, und im Mikrocontroller 12 werden die beiden Bytes der Istdrehzahl in die entsprechenden Pufferspeicher 332 übertragen, damit sie dort für eine anschließende Übertragung bereitstehen.

Nun sendet der PC 11 gemäß Fig. 18 erneut eine Startbedingung 252, und das erste Byte 254 mit derselben Geräteadresse wie im Byte 242, aber im Bit 8, das mit 256 bezeichnet ist, den Wert "1" für "Lesen". Nachdem die Adresse und das Bit 8 geprüft sind, erwartet der PC 11 die Übertragung der Datenblöcke 258, 262 aus den entsprechenden Puffern im Pufferspeicher 332, und diese werden nacheinander über den I²C-Bus 13 zum PC 11 übertragen. Dieser schickt nach dem Byte 258 eine Bestätigung "A", die in Fig. 18 mit 260 bezeichnet ist und die vom Mikrocontroller 12 geprüft wird. Nach dem letzten Byte 262 sendet er bei 263 keine Bestätigung ("A/"). Wenn der PC 11 beide Datenbytes 258 und 262 erhalten hat, schickt er die Stoppbedingung "P" 264. Dies bedeutet, daß die Zahl der übertragenen Daenbytes 258, 262 geprüft und korrekt ist.

### Schreiben in das EEPROM 14

Dies ist der Vorgang 420 in Fig. 17, nämlich "Objekt schreiben". Der PC 11, welcher den Master darstellt, eröffnet die Kommunikation mit der Startbedingung "S" 240, vgl. Fig. 17. Das anschließende Byte 242 enthält in seinen Bits 1 bis 7 die Geräteadresse, und im niedrigsten Bit 243, dem Bit 8, eine Information darüber, ob ein Lesevorgang oder ein Schreibvorgang folgt. In diesem Fall ist das Bit 8 eine Null, d.h. der Computer 11 will Daten schreiben, z.B. in das RAM 330 oder das EEPROM 14. Wohin geschrieben werden soll, ergibt sich aus der Objektadresse 246 und der Objekttabelle 280.

Zunächst wird die Adresse in den Bits 1 bis 7 verglichen mit der Geräteadresse 324 im RAM 330 des Mikrocontrollers 12. Stimmen diese sieben übertragenen Bits mit der Geräteadresse 324 nicht überein, so schaltet sich das Gerät von der Kommunikation ab. Stimmt die Adresse überein, so wird das Bit 8 kontrolliert. Anschließend sendet der Mikrocontroller 12 ein Bestätigungssignal "A" 244.

Nun sendet der PC 11 das nächste Byte 246, nämlich die Objektadresse. Anhand dieser Adresse werden aus der Objekttabelle 280 die Informationen zu dem Objekt geholt, das anschließend übertragen werden soll. Wenn es sich bei dem Objekt z.B. um die Solldrehzahl handelt (Tabellenwert B3 in der Spalte 284 "Objektname"), so ergibt sich aus der Objektadresse "03", daß die Solldrehzahl zwei Bytes enthält und im EEPROM 14 unter der Adresse "0x01" gespeichert ist. Man weiß also, daß zwei Bytes übertragen werden sollen, und wenn z.B. weniger oder mehr als zwei Bytes übertragen wurden, weiß man, daß ein Fehler aufgetreten ist. Nach dem Empfang des Bytes 246 kommt wieder ein Bestätigungssignal "A", das mit 247 bezeichnet ist. Nun werden vom PC 11 die Datenbytes 248, 249 dieses Objekts in die zugeordneten Puffer 332 im RAM 330 übertragen, wobei nach jedem Byte durch den Mikrocontroller 12 ein Bestätigungssignal "A" gesendet wird.

Hat der PC 11 alle Bytes übertragen und jeweils ein Bestätigungssignal "A" erhalten, so sendet er die Stoppbedingung "P" 250. Nun findet im Mikrocontroller 12 die Kontrolle statt, ob die erwartete Anzahl von Bytes übertragen wurde. Stimmt diese Zahl nicht, werden die Daten verworfen. Stimmt die Zahl, werden die Daten an der ermittelten Adresse "0x01" ins EEPROM 14 geschrieben, indem die Übertragungsroutine des I²C-Busses 15 zum EEPROM aufgerufen wird. Diese Routine benötigt zunächst die Adresse ("0x01"), wohin die Daten im EEPROM 14 abgespeichert werden sollen. Dann überträgt die Routine die Daten, die beim Empfang (vom PC 11) in den Datenpuffern 332 im RAM 330 abgelegt wurden. Die Routine sendet die Daten des Puffers 332 mit dem Datenbyte 248 und anschließend des Puffers 332 mit dem Datenbyte 249 zum EEPROM 14. Anhand der Zahl der Bytes des Objekts, welche aus Spalte 286 der Objekttabelle 280 entnommen wurde, weiß die Routine, welche und wieviele Puffer 332 ausgelesen bzw. übertragen werden müssen.

Nach der Übertragung in das EEPROM 14 können die übertragenen Daten ggf. noch einmal zurückgelesen werden, um einen Vergleich mit den gesendeten Daten zu machen und dadurch die Richtigkeit der Übertragung zu prüfen.

### Ausgabe von Daten aus dem EEPROM 14

Auch diese Übertragung erfolgt über die Pufferspeicher 332 im RAM 330 des Mikrocontrollers 12, d.h. ein erster Befehl (oberer Teil von Fig. 18) des PC 11 (Master) veranlaßt, daß die Daten aus dem EEPROM 14 in die betreffenden Pufferspeicher 332 übertragen werden, und ein zweiter Befehl (unterer Teil von Fig. 18) veranlaßt, daß diese Daten aus den betreffenden Pufferspeichern 332 zum PC 11 übertragen werden.

Diese Übertragung wird also vom PC 11 eingeleitet, der als Master arbeitet. Dieser sendet nach der Startbedingung "S" 240 das erste Byte 242 mit der Geräteadresse und dem Bit 243, welches hier eine Null enthält, d.h. es handelt sich um einen Schreibbefehl. Nach erfolgreicher Überprüfung der Adresse im Byte 242 wird das Bit 243 geprüft. Anschließend sendet der Mikrocontroller 12 bei 244 ein Bestätigungssignal "A". Daraufhin überträgt der PC 11 im Byte 246 die Objektadresse des Objektes, das er anschließend auslesen möchte. Die Übertragung wird vom Mikrocontroller 12 mit einem Bestätigungssignal "A" 247 bestätigt, und anschließend sendet der PC 11 bei 250 eine Stoppbedingung "P".

Mit Hilfe der Objektadresse (Byte 246) ergibt sich aus der Objekttabelle 280 (Fig. 19), um weiches Objekt es sich handelt, wie lange dieses ist, und wo es gespeichert ist. Lautet z.B. die Objektadresse "03", so handelt es sich um das Objekt B3 "Solldrehzahl" mit einer Länge von zwei Byte, und dieses ist im EEPROM an der Adresse "0x01" gespeichert. Mit Hilfe dieser Daten wird dann dieses Objekt, also hier die Solldrehzahl, aus dem EEPROM 14 in die entsprechenden Puffer 332 des RAM 330 übertragen.

Nun sendet der PC 11 erneut bei 252 eine Startbedingung "S", und anschließend bei 254 das erste Byte mit der Geräteadresse und dem Bit 256, das hier den Wert "1" hat, entsprechend einem Lesevorgang. Erneut wird die Geräteadresse (im Byte 254) mit der Adresse 324 im RAM 330 verglichen, und wenn sie übereinstimmt, wird das Bit 256 geprüft. Nach erfolgreicher Prüfung sendet der Mikrocontroller 12 bei 257 ein Bestätigungssignal "A". Anschließend übersendet er die Daten aus den Pufferspeichern 332 im RAM 330. Zuerst kommt das erste Byte 258, das bei 260 vom PC 11 mit einem Bestätigungssignal "A" bestätigt wird. Dann kommt das zweite und letzte Byte 262, bei dem vor der nachfolgenden Stoppbedingung 264 keine Bestätigung erfolgt ("A/" bei 263). Da in diesem Fall das übertragene Objekt zwei Bytes 258, 262 enthält, wird also bei 264 vom PC 11 die Stoppbedingung "P" gesendet, da der PC 11 zwei Bytes empfangen hat.

Im Betrieb arbeitet also der Motor mit den Daten, welche im RAM 330 des Mikrocontrollers 12 bei der Initialisierung gespeichert wurden. Nach einem Reset, z.B. durch eine elektromagnetische Störung, sind diese Daten verloren. Aus diesem Grund wird nach jedem Resetvorgang, und nach dem Start des Geräts, der RAM-Bereich 330 neu initialisiert, d.h. die Daten, mit denen gearbeitet werden soll, werden aus dem EEPROM 14 über den Bus 15 in den RAM-Bereich 330 des Mikrocontrollers 12 geladen.

Im Betrieb können, wie soeben erläutert, Daten aus dem EEPROM 14 ausgelesen oder umgekehrt ins EEPROM 14 geschrieben werden. Zusätzlich gibt es die Möglichkeit, Daten aus dem RAM 330, also z.B. die Istdrehzahl (Objekt A11 in Fig. 20), oder aus dem ROM 336 (z.B. den Hersteller; Objekt O1 in Fig. 20) auszulesen oder solche Daten in das RAM 330 zu schreiben, z.B. die gewünschte Solldrehzahl, sofern diese vom Master 11 vorgegeben wird. Wohin die Daten geschrieben werden, oder woher sie geholt werden (RAM 330, ROM 336, oder EEPROM 14, und die dortige Adresse), wird aus der Objekttabelle 280 ermittelt, welche im Gerät fest gespeichert ist. Durch Verwendung dieser Objekttabelle entfällt also die Notwendigkeit, in einem Schreib- oder Lesebefehl ausführliche Adreßdaten zu übertragen, d.h. es wird hier eine Art indirekte Adressierung verwendet, weil alle wesentlichen Daten der Objekte in der Objekttabelle 280 abgelegt sind, bevorzugt in Form einer permanenten Speicherung (ROM).

Durch die Zwischenschaltung der Pufferspeicher 332 ergibt sich in jedem Fall, daß beim Lesen die Daten aus diesen Pufferspeichern 332 ausgelesen werden, und daß beim Schreiben die Daten als erstes in diese Pufferspeicher 332 geschrieben werden, so daß entsprechende Adreßangaben in den Befehlen entfallen können. Dies ergibt insgesamt einen einfachen Aufbau und eine schnelle Abarbeitung der Befehle, so daß mit einem einfachen, preiswerten Mikrocontroller gearbeitet werden kann, der zusätzlich weitere Aufgaben erfüllen kann wie:
A/D-Wandlung
Strombegrenzung
Drehzahlregelung
Steuerung der Kommutierung des Motors 10' (Fig. 11),
und andere.
Falls bei einer Übertragung eine Datenmenge über den Bus 13 oder 15 übertragen werden muß, die größer ist als die Zahl der Pufferspeicher 332, wird die Übertragung in eine Mehrzahl von Übertragungen unterteilt, also in Pakete.

**Fig. 22** zeigt, wie ein Gerätelüfter 340 über sein Interface 13a und den seriellen Bus 13 zur Programmierung an einen Laptop 11 angeschlossen wird. Auf diese Weise können die Daten im EEPROM 14 des Lüfters 340 den jeweiligen Bedingungen angepaßt werden. Anschließend wird der Lüfter 340 vom Bus 13 getrennt und als selbständige Einheit betrieben, da die eingegebenen Daten im EEPROM 14 gespeichert bleiben. Die Betriebsstunden werden laufend im EEPROM 14 gezählt und können ausgelesen werden, indem man den Laptop 11 erneut anschließt.

**Fig. 23** zeigt eine sogenannte Lüfterbatterie mit drei Gerätelüftern 340A, 340B, 340C, von denen jeder sein eigenes EEPROM 14A, 14B, 14C hat, das - im Lüfter - jeweils über einen seriellen Bus 15 mit dem dortigen Mikrocontroller verbunden ist.

Alle drei Lüfter sind über den Bus 13 mit einer Zentraleinheit 11 verbunden, z.B. einem PC. Im EEPROM 14 ist - beispielhaft - die Adresse A des Lüfters 340 A gespeichert, ferner der Wert I_{ref} für die Strombegrenzung beim Start, und die Zeit T_{SA} (vgl. Fig. 5, Schritt S52), also die Zeit Ts für den Lüfter 340A.

Analog enthalten die EEPROMs 14B und 14C die (Geräte)-Adressen B bzw. C der Lüfter 340B und 340C. Ferner enthalten sie die zugehörigen Werte I_{ref} für die Strombegrenzung des jeweiligen Lüfters, und die Zeiten T_{SB} bzw. T_{SC}. auf diese Weise kann man den Start der drei Lüfter zeitlich staffeln, d.h. der Lüfter 340A startet z.B. mit maximalem Strom, der Lüfter 340B mit mittlerem Strom, und der Lüfter 340C mit niedrigem Strom, um eine (nicht dargestellte) zentrale Stromversorgung aller drei Lüfter beim Start nicht zu überlasten. Alternativ kann man so die Lüfter zeitlich gestaffelt einschalten.

Indem die Zentraleinheit 11 die Drehzahlen aller drei Lüfter ständig überwacht, kann man feststellen, wenn z.B. der Lüfter 340B blockiert wird, und die Zentraleinheit 11 kann dann - über den Bus 13 - die Drehzahlen der Lüfter 340A und 340C entsprechend erhöhen, um diesen Ausfall zu kompensieren. Hierzu wird in diesem Fall über den Bus 13 eine höhere Solldrehzahl für die Lüfter 340A, 340C vorgegeben, wie das vorstehend bereits im einzelnen beschrieben wurde.

Bei niedrigen Temperaturen kann die Zentraleinheit 11 über den Bus 13 einen oder mehrere der Lüfter abschalten.

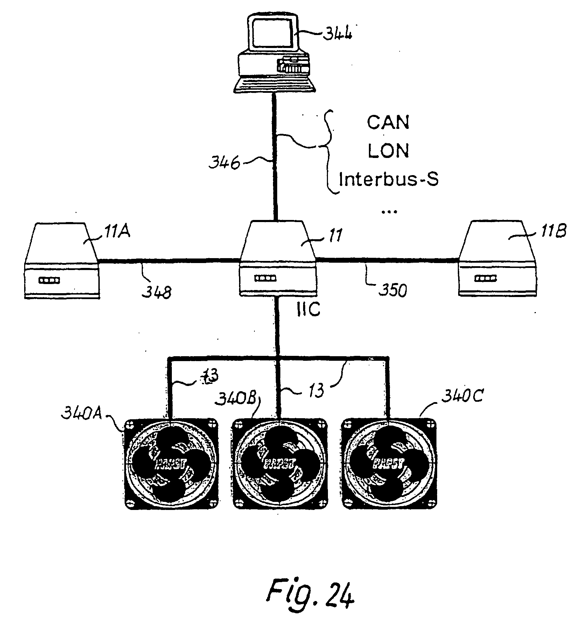

Die Darstellung nach **Fig. 24** ist ähnlich Fig. 23. Da der Bus 13 - bei der beschriebenen, sehr einfachen und preiswerten Bauart - nur relativ kurz sein darf, z.B. maximal 4 m, kann die Zentraleinheit 11 über einen leistungsfähigeren Bus 346 mit einem Server 344 verbunden werden. Wie angegeben, kann dies z.B. ein CAN-Bus sein, oder ein LON-Bus, oder ein Interbus-S. Ebenso ist über einen beliebigen Bus 348 eine Kommunikation mit einer Zentraleinheit 11A möglich, die ggf. weitere Lüfter steuert, und über einen Bus 350 eine Kommunikation mit einer Zentraleinheit 11B, die ebenfalls weitere Lüfter oder sonstige Geräte steuern kann. Die EEPROMs der drei Lüfter 340A, 340B, 340C der Fig. 24 können mit Fig. 23 identisch sein und sind deshalb in Fig.24 nicht nochmals dargestellt.

Naturgemäß ist die Erfindung nicht auf die Anwendung bei Lüftern beschränkt, doch ist dies ein sehr vorteilhaftes Anwendungsgebiet, da bei Lüftern eine Vielzahl von Variablen vorliegt, die je nach Anwendungsfall eingestellt werden müssen.

Nochmals ist darauf hinzuweisen, daß es viele verschiedene Bussysteme gibt, und daß der beschriebene serielle Bus deshalb nur eine bevorzugte Ausführungsform der Erfindung darstellt. Auch sonst sind im Rahmen der vorliegenden Erfindung vielfache Abwandlungen und Modifikationen möglich.

## Patentansprüche

1. Anordnung mit einem Elektromotor (10; 10'), insbesondere zum Antrieb eines Lüfters (73),
mit einem Mikrocontroller (12) oder Mikroprozessor, im folgenden kurz Mikroprozessor genannt, zum Beeinflussen mindestens einer Motorfunktion, wobei diesem Mikroprozessor(12) ein flüchtiges Speicherglied (330) und ein nichtflüchtiges Speicherglied (14) zugeordnet sind, welche Speicherglieder zum Speichern mindestens eines Objekts als Vorgabe für diese Motorfunktion ausgebildet sind,
ferner mit einem dem Elektromotor zugeordneten Interface (13a) für eine Datenleitung (13; 210, 226) zum Übertragen dieses mindestens einen Objekts zu und/oder von mindestens einem der Speicherglieder (14, 330), **gekennzeichnet durch** ein dem Mikroprozessor (12) zugeordnetes gespeichertes Verzeichnis (280), welches zu Objekten, die über die Datenleitung (13, 210, 226) übertragbar sind, vorgegebene Parameter (286, 288, 290) für die Übertragung dieser Objekte enthält.

2. Anordnung nach Anspruch 1, bei welcher das gespeicherte Verzeichnis (280) Angaben (286) zur Länge übertragbarer Objekte enthält.

3. Anordnung nach Anspruch 1 oder 2, bei welcher das gespeicherte Verzeichnis (280) Angaben (288) darüber enthält, ob das betreffende Objekt zur Speicherung im nichtflüchtigen Speicherglied (14) oder in einem flüchtigen Speicherglied (330) bestimmt ist.

4. Anordnung nach einem oder mehreren der vorhergehenden Ansprüche, bei welcher das gespeicherte Verzeichnis (280) Angaben (290) zur Adresse des Objekts in einem Speicherglied (14, 330) enthält.

5. Anordnung nach einem oder mehreren der vorhergehenden Ansprüche, bei welcher das gespeicherte Verzeichnis (280) in einem dem Mikroprozessor (12) zugeordneten Speicher (336) nichtflüchtig, und insbesondere dauerhaft gespeichert ist.

6. Anordnung nach Anspruch 5, bei welcher das gespeicherte Verzeichnis (280) Bestandteil der Hardware des Mikroprozessors (12) ist.

7. Anordnung nach einem oder mehreren der vorhergehenden Ansprüche, bei welcher der Mikroprozessor (12) mit dem Interface (13a) für die Datenleitung (13) verbunden ist,
und die Übertragung von Objekten vom und/oder zum nichtflüchtigen Speicherglied (14) über den Mikroprozessor (12) erfolgt.

8. Anordnung nach einem oder mehreren der vorhergehenden Ansprüche, bei welcher die Datenleitung als serieller Datenbus (13, 210, 226) ausgebildet ist.

9. Anordnung nach einem oder mehreren der vorhergehenden Ansprüche, bei welcher in dem dem Mikroprozessor (12) zugeordneten flüchtigen Speicher (330) mindestens ein Pufferspeicher (332) für den Datenverkehr mit einer Datenleitung (13; 15) vorgesehen ist.

10. Anordnung nach einem oder mehreren der vorhergehenden Ansprüche, bei welcher das nichtflüchtige Speicherglied (14) über eine Leitung (CS) mit dem Mikroprozessor (12) verbunden ist, welche, vom Mikroprozessor (12) gesteuert, einen Schreibschutz des nichtflüchtigen Speicherglieds (14) beeinflusst.

11. Anordnung nach einem oder mehreren der vorhergehenden Ansprüche, bei welcher der Mikroprozessor (12) ein vorgegebenes Speicherglied (332) zum Speichern einer über die Datenleitung (13) zugeführten Adresse (Fig. 17: 242; Fig. 18: 254), eine Anordnung (14, 330) zum Speichern einer Adresse (324) der zu adressierenden Anordnung, und eine Vergleichsanordnung zum Vergleichen dieser beiden Adressen aufweist.

12. Anordnung nach einem oder mehreren der vorhergehenden Ansprüche, bei welcher dem Mikroprozessor (12) ein Speicherglied (332) zum Speichern einer ein zu übertragendes Objekt kennzeichnenden Variablen (Fig. 18, 19: 246; Fig. 18: 254) zugeordnet ist,
und mit Hilfe dieser Variablen aus einem in der Anordnung gespeicherten Verzeichnis (280) mindestens ein Kennzeichen (286, 288, 290) dieses Objekts für dessen Weiterverarbeitung entnehmbar ist.

13. Anordnung nach Anspruch 12, bei welcher das Kennzeichen die Länge (286) dieses Objekts ist.

14. Anordnung nach Anspruch 12 oder 13, bei welcher das Kennzeichen die Hardwareadresse (288, 290) dieses Objekts ist.

15. Verwendung einer Anordnung nach einem oder mehreren der vorhergehenden Ansprüche bei einem Motor (10; 10'), welcher einen Lüfter (73; 340) antreibt.

16. Verwendung nach Anspruch 15, bei welcher der Lüfter ein Gerätelüfter (340A, 340B, 340C) ist.

## Claims

1. Arrangement with an electric motor (10; 10'), in particular for driving a fan (73),
with a microcontroller (12) or microprocessor, referred to in the following as microprocessor for short, for influencing at least one motor function, wherein this microprocessor (12) has associated therewith a volatile memory element (330) and a non-volatile memory element (14), which memory elements are designed for storage of at least one object as a setting parameter for this motor function,
further with an interface (13a) associated with the electric motor for a data lead (13; 218, 226) for transmitting this at least one object to and/or from at least one of the memory elements (14, 330),
**characterised by** a stored list (280) which is associated with the microprocessor (12) and contains predetermined parameters (286, 288, 290) for transmission of objects relating to objects which can be transmitted via the data lead (13, 210, 226).

2. Arrangement according to claim 1, in which the stored list (280) contains information (286) on the length of objects which can be transmitted.

3. Arrangement according to claim 1 or 2, in which the stored list (280) contains information (288) about whether the object concerned is intended for storage in the non-volatile memory element (14) or in a volatile memory element (330).

4. Arrangement according to one or more of the preceding claims, in which the stored list (280) contains information (290) on the address of the object in a memory element (14, 330).

5. Arrangement according to one or more of the preceding claims, in which the stored list (280) is stored in a non-volatile and in particular permanent manner in a memory (336) associated with the microprocessor (12).

6. Arrangement according to claim 5, in which the stored list (280) is part of the hardware of the microprocessor (12).

7. Arrangement according to one or more of the preceding claims, in which the microprocessor (12) is connected to the interface (13a) for the data lead (13), and the transmission of objects from and/or to the non-volatile memory element (14) takes place through the microprocessor (12).

8. Arrangement according to one or more of the preceding claims, in which the data lead is embodied as a serial data bus (13, 210, 226).

9. Arrangement according to one or more of the preceding claims, in which at least one buffer memory (332) is provided in the volatile memory (330) associated with the microprocessor (12) for the data traffic with a data lead (13; 15).

10. Arrangement according to one or more of the preceding claims, in which the non-volatile memory element (14) is connected to the microprocessor (12) through a lead (CS) which, controlled by the microprocessor (12), influences a write protection for the non-volatile memory element (14).

11. Arrangement according to one or more of the preceding claims, in which the microprocessor (12) comprises a predetermined memory element (332) for storage of an address supplied through the data lead (13) (fig. 17: 242; fig. 18: 254), an arrangement (14, 330) for storage of an address (324) of the arrangement to be addressed, and a comparison arrangement for comparison of these two addresses.

12. Arrangement according to one or more of the preceding claims, in which the microprocessor (12) has associated therewith a memory element (332) for storage of a variable characterising an object to be transmitted (figs. 18, 19: 246; fig. 18: 254),
and with the aid of this variable at least one characteristic parameter (286, 288, 290) of this object can be extracted from a list (280) stored in the arrangement for its further processing.

13. Arrangement according to claim 12, in which the characteristic parameter is the length (286) of this object.

14. Arrangement according to claim 12 or 13, in which the characteristic parameter is the hardware address (288, 290) of this object.

15. Use of an arrangement according to one or more of the preceding claims with a motor (10; 10'), which drives a fan (73; 340).

16. Use according to claim 15, in which the fan is an equipment fan (340A, 340B, 340C).

## Revendications

1. Dispositif comportant un moteur électrique (10 ; 10'), en particulier pour l'entraînement d'un ventilateur (73),
avec un microcontrôleur ou microprocesseur (12), appelé dans la suite microprocesseur, pour influencer au moins une fonction du moteur, un élément de mémoire volatile (330) et un élément de mémoire non volatile (14) étant associés à ce microprocesseur (12), lesquels éléments de mémoire sont conçus pour mémoriser au moins un objet servant de consigne pour cette fonction du moteur,
ainsi qu'avec une interface (13a) associée au moteur électrique pour une ligne de données (13 ; 210, 226) servant à la transmission de cet au moins un objet vers et/ou depuis au moins un des éléments de mémoire (14, 330),
**caractérisé par** une table enregistrée (280) associée au microprocesseur (12), laquelle contient des paramètres prédéfinis (286, 288, 290) concernant les objets qui sont transmissibles via la ligne de données (13, 210, 226), pour la transmission de ces objets.

2. Dispositif selon la revendication 1, dans lequel la table enregistrée (280) contient des informations (286) sur la longueur des objets transmissibles.

3. Dispositif selon la revendication 1 ou 2, dans lequel la table enregistrée (280) contient des informations (288) indiquant si l'objet concerné est destiné à être enregistré dans l'élément de mémoire non volatile (14) ou dans un élément de mémoire volatile (330).

4. Dispositif selon l'une ou plusieurs des revendications précédentes, dans lequel la table enregistrée (280) contient des informations (290) sur l'adresse de l'objet dans un élément de mémoire (14, 330).

5. Dispositif selon l'une ou plusieurs des revendications précédentes, dans lequel la table enregistrée (280) est enregistrée de manière non volatile et en particulier durable dans une mémoire (336) associée au microprocesseur (12).

6. Dispositif selon la revendication 5, dans lequel la table enregistrée (280) fait partie intégrante du matériel du microprocesseur (12).

7. Dispositif selon l'une ou plusieurs des revendications précédentes, dans lequel le microprocesseur (12) est relié à l'interface (13a) pour la ligne de données (13),
et la transmission des objets s'effectue depuis et/ou vers l'élément de mémoire non volatile (14) via le microprocesseur (12).

8. Dispositif selon l'une ou plusieurs des revendications précédentes, dans lequel la ligne de données est un bus de données série (13, 210, 226).

9. Dispositif selon l'une ou plusieurs des revendications précédentes, dans lequel il est prévu dans la mémoire volatile (330) associée au microprocesseur (12) au moins une mémoire tampon (332) pour le trafic de données avec une ligne de données (13 ; 15).

10. Dispositif selon l'une ou plusieurs des revendications précédentes, dans lequel l'élément de mémoire non volatile (14) est relié au microprocesseur (12) par une ligne (CS) laquelle, sous la commande du microprocesseur (12), influence une protection d'écriture de l'élément de mémoire non volatile (14).

11. Dispositif selon l'une ou plusieurs des revendications précédentes, dans lequel le microprocesseur (12) présente un élément de mémoire prédéfini (332) pour la mémorisation d'une adresse (fig. 17 : 242 ; fig. 18 : 254) délivrée via la ligne de données (13), un dispositif (14, 330) pour la mémorisation d'une adresse (324) du dispositif à adresser et un dispositif de comparaison pour la comparaison de ces deux adresses.

12. Dispositif selon l'une ou plusieurs des revendications précédentes, dans lequel un élément mémoire (332) pour la mémorisation d'une variable (fig. 18, 19 : 246, fig. 18 : 254) caractérisant un objet à transmettre est associé au microprocesseur (12)
et dans lequel, à l'aide de cette variable, on peut lire à partir d'une table (280) enregistrée dans le dispositif au moins une caractéristique (286, 288, 290) de cet objet pour son traitement.

13. Dispositif selon la revendication 12, dans lequel la caractéristique est la longueur (286) de cet objet.

14. Dispositif selon la revendication 12 ou 13, dans lequel la caractéristique est l'adresse matérielle (288, 290) de cet objet.

15. Utilisation d'un dispositif selon l'une ou plusieurs des revendications précédentes pour un moteur (10 ; 10') qui entraîne un ventilateur (73 ; 340).

16. Utilisation selon la revendication 15, dans laquelle le ventilateur est un ventilateur d'appareils (340A, 340B, 340C).
